Europäisches Patentamt

European Patent Office

Office européen des brevets

(11) Numéro de publication: **0 334 746 B1**

# FASCICULE DE BREVET EUROPEEN

(45) Date de publication de fascicule du brevet: **01.06.94** (51) Int. Cl.5: **H04Q 7/04**, H04B 7/26

(21) Numéro de dépôt: **89400786.3**

(22) Date de dépôt: **21.03.89**

(54) **Dispositif pour l'établissement et l'acheminement de communications téléphoniques entre abonnés d'un réseau et/ou d'un réseau téléphonique filaire.**

(30) Priorité: **22.03.88 FR 8803683**

(43) Date de publication de la demande:
**27.09.89 Bulletin 89/39**

(45) Mention de la délivrance du brevet:
**01.06.94 Bulletin 94/22**

(84) Etats contractants désignés:
**BE DE ES GB IT**

(56) Documents cités:
**WO-A-87/01537**
**FR-A- 2 309 103**
**US-A- 4 082 919**

**COMMUTATION & TRANSMISSION, vol. 7, no. 2, 1985, pages 39-50, Paris, FR; J. CUEUGNIET et al.: "RADIOCOM 2000, réseau multiservices de radiotéléphonie"**

**COMMUTATION & TRANSMISSION, vol. 8, no. 1, 1986, pages 19-30, Paris, FR; G. BANOUET et al.: "RAMAGE, un réseau radiotéléphonique mobile privé"**

(73) Titulaire: **THOMSON-CSF**
**173, Boulevard Haussmann**
**F-75008 Paris(FR)**

(72) Inventeur: **Soury, Jean-Pierre**
**THOMSON-CSF**
**SCPI-CEDEX 67**
**F-92045 Paris la Défense(FR)**
Inventeur: **Bovis, Pierre**
**THOMSON-CSF**
**SCPI-CEDEX 67**
**F-92045 Paris la Défense(FR)**
Inventeur: **Couthouis, Daniel**
**THOMSON-CSF**
**SCPI-CEDEX 67**
**F-92045 Paris la Défense(FR)**
Inventeur: **Robert, Pierre**
**THOMSON-CSF**
**SCPI-CEDEX 67**
**F-92045 Paris la Défense(FR)**

EP 0 334 746 B1

COMMUTATION & TRANSMISSION, vol. 9, no. 1, 1987, pages 41-54, Paris, FR; B. FINO et al.: "Les radiocommunications avec les mobiles"

ERICSSON REVIEW, vol. 64, no. B, 1987, pages 50-54, Stockholm, SE; L. LINDEN: "Private mobile radio systems"

L'ONDE ELECTRIOUE, vol. 64, no. 6, novembre/décembre 1984, pages 25-33, Argenton-Sur-Creuse, FR; J.-C. FABRE et al.: "Le réseau SAPHIR de la Gendarmerie nationale"

PATENT ABSTRACTS OF JAPAN, vol. 5, no. 51 (E-51)[723], 10 avril 1981, page 102E 51 & JP-A-56 2753

(74) Mandataire: **Lincot, Georges et al**
**THOMSON-CSF,**
**SCPI,**
**B.P. 329,**
**50, rue Jean-Pierre Timbaud**
**F-92402 Courbevoie Cédex (FR)**

## Description

La présente invention concerne un dispositif pour l'établissement de communications téléphoniques entre abonnés d'un réseau radio et/ou d'un réseau téléphonique filaire.

Elle s'applique notamment au domaine des radiocommunications militaires où elle permet l'intégration automatisée de la radio de combat aux réseaux téléphoniques existants en rendant dépendants les divers moyens radiotactiques HF, VHF et VUHF.

Dans les systèmes de radiocommunications militaires connus, l'établissement des communications entre un réseau radio et réseau téléphonique câblé ou filaire est effectué manuellement par un opérateur qui établit au moyen d'un tableau de connexions les liaisons entre les émetteurs-récepteurs du réseau radio et les lignes de transmission du réseau téléphonique filaire. Outre le fait que cette façon de procéder demande à l'opérateur l'exécution de procédures manuelles compliquées ces systèmes apparaissent désuets et inadaptés pour rendre compte de l'évolution rapide de situations sur le champ de bataille, notamment ils ne permettent pas d'acheminer ou de recueillir rapidement l'information et n'offrent pas une protection efficace contre les contre-mesures ennemies.

Certains dispositifs du domaine civil, tel que celui connu sous la désignation "RADIOCOM 2000" et dont une description des auteurs J. CUEUGNIET et P. DUPLESSIS peut être trouvée dans la revue "Commutation et Transmision" vol. 7 n°2, 1985, pages 39-50, permettent cependant d'établir et d'acheminer des communications téléphoniques entre abonnés d'un réseau radio cellulaire et ceux d'un réseau filaire, mais l'organisation centralisée de leur relais ne peut peut assurer une gestion rapide des communications avec une protection efficace contre des essais de pénétration et d'indiscrétion de personnes non autorisées, de sorte que ces dispositifs apparaissent tout à fait impropres à une utilisation dans le domaine militaire.

Le but de l'invention est de pallier les inconvénients précités.

A cet effet, l'invention a pour objet, un dispositif pour l'établissement et l'acheminement de communications téléphoniques entre abonnés d'un réseau radio et/ou d'un réseau téléphonique filaire dans lesquels les abonnés du réseau radio disposent de postes émetteurs-récepteurs radio fonctionnent à l'alternat et les abonnés des deux réseaux disposent de moyens de numérotation pour appeler leurs correspondants, du type comprenant un auto-commutateur téléphonique couplé au réseau téléphonique filaire au moyen de lignes téléphoniques filaires, l'auto-commutateur étant couplé au réseau téléphonique radio au moyen d'une pluralité d'émetteurs-récepteurs radio au travers d'une unité de raccordement radio, chaque unité de traitement est programmée pour permettre une organisation du réseau d'abonnés radio en grappes d'abonnés radio communiquant sur une même fréquence et/ou sur un même canal de transmission, les communications pouvant avoir lieu entre abonnés dans une même grappe ou entre abonnés appartenant à des grappes différentes, caractérisé en ce que l'unité de raccordement radio comprend une pluralité déterminée d'unités de traitement programmées reliées chacune à un émetteur-récepteur par l'intermédiaire d'un circuit d'interface et un modulateur de signal commandé par le circuit d'interface pour transmettre les signaux de parole entre l'émetteur-récepteur et le circuit d'interface, le circuit d'interface comportant des détecteurs d'activité vocale pour permettre la transmission des appels dans un mode à l'alternat entre d'une part, les abonnés du réseau de radiotéléphone et entre les abonnés des deux réseaux d'autre part, chaque unité de traitement étant programmée suivant des niveaux d'autorisation hiérarchiques pour permettre une organisation du réseau d'abonnés radio en groupes d'abonnés radio communiquant sur une même fréquence et/ou sur le même canal de transmission, les appels pouvant avoir lieu entre les abonnés d'un même groupe ou entre abonnés appartenant à différents groupes, ou entre abonnés appartenant à un groupe et les abonnés du réseau téléphone filaire.

L'invention a pour avantage qu'elle permet d'assurer dans les systèmes de radiocommunication une coordination horizontale et verticale entre les abonnés du réseau radio et ceux du réseau filaire.

Au plan technique elle permet d'établir de manière entièrement automatique des communications entre des postes radio fonctionnant à l'alternat et des postes téléphoniques filaires, les liaisons radio pouvant être chiffrées ou non au choix de l'abonné radio.

Au plan fonctionnel elle donne au commandement des capacités, maitrisables et ajustables de mise en communication automatique, par simple numérotation d'utilisateurs appartenant à deux populations différentes, les abonnés téléphoniques d'un poste de commandement avec les correspondants radio d'un ou plusieurs réseaux de combat, par exemple.

Grâce à l'invention, les abonnés téléphoniques du réseau filaire disposent d'une part, entre eux, de l'ensemble des facilités offertes par l'auto-commutateur c'est-à-dire des possibilités d'accès vers des réseaux commutés extérieurs ou des possibilités d'obtenir des communications en duplex, et d'autre part, les abonnés téléphoniques du réseau filaire disposent, entre eux et les correspondants radio, de communi-

EP 0 334 746 B1

cations établies à l'alternat pour faciliter la transmission des ordres et des compte-rendus sous le contrôle de leur hiérarchie.

Egalement grâce à l'invention, les correspondants radio disposent d'une part, entre eux, en respectant toute fois les contraintes opérationnelles et hiérarchiques propres à l'exploitation d'un réseau de combat, de la possibilité d'établir des communications à l'alternat pour, établir par relayage des liaisons entre réseaux hétérogènes, par exemple, la création de réseaux de circonstances, ou encore alléger la veille des opérateurs d'un même réseau et d'autre part, entre eux et les abonnés téléphoniques de communications établies à l'alternat pour faciliter la transmission des ordres et des compte-rendus sous contrôle hiérarchique.

D'autres caractéristiques et avantages de l'invention apparaîtront ci-après à l'aide de la description qui va suivre faite en regard des dessins annexés qui représentent :
- la figure 1 un mode de réalisation d'un dispositif selon l'invention ;
- la figure 2 un schéma général simplifié d'une unité de raccordement représenté à la figure 1 ;
- la figure 3 un mode de réalisation d'un bloc de couplage de grappes composant l'unité de raccordement de la figure 2 ;
- la figure 4 l'organisation d'un clavier de terminal d'abonné mobile du dispositif représenté à la figure 1 ;
- la figure 5 un exemple d'établissement d'une communication radio intergrappes ;
- la figure 6 un exemple illustrant une communication radio intergrappes établie ;
- la figure 7 un exemple pour illustrer une communication intragrappe ;
- les figures 8A à 8Y un exemple, de programmation d'une unité de raccordement selon l'invention.

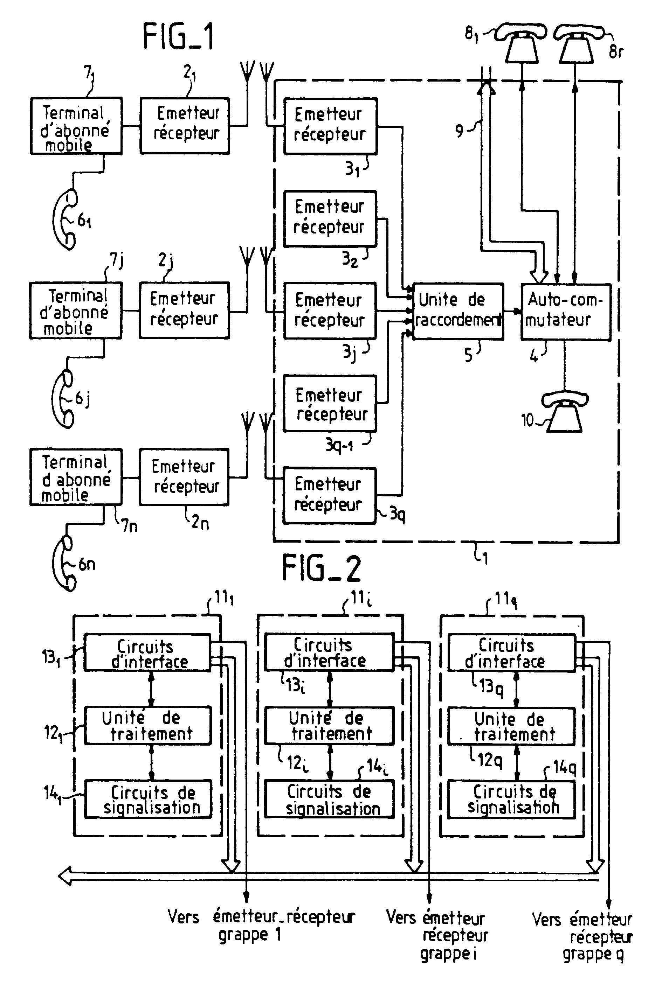

Le dispositif selon l'invention qui est représenté à la figure 1 comprend une station de raccordement 1, représentée à l'intérieur d'une ligne en pointillés, couplée par voies radio fonctionnant à l'alternat à un ensemble de n postes radio émetteurs-récepteurs référencés de $2_1$ à $2_n$.

La station de raccordement 1 comprend un ensemble de q émetteurs-récepteurs références de $3_1$ à $3_q$ couplés à un auto-commutateur téléphonique numérique 4 au travers d'une unité de raccordement 5.

Les émetteurs-récepteurs radio $2_1$ à $2_n$ sont couplés à des combinés téléphoniques référencés de $6_1$ à $6_n$ au travers de terminaux d'abonnés mobiles référencés respectivement de $7_1$ à $7_n$ constitués à la manière de poste téléphonique au moyen de claviers de numérotation.

L'auto-commutateur numérique 4 est composé de façon connue par une unité de traitement microprogrammée reliée à des postes téléphoniques filaires d'abonnés locaux référencés respectivement de $8_1$ à $8_r$. Il est également relié à un réseau téléphonique extérieur commuté, non représenté, par des lignes téléphoniques extérieures 9 et à un combiné téléphonique 10 utilisable directement par l'opérateur de la station 1.

Les utilisateurs de la station de raccordement 1 se composent d'abonnés filaires et de correspondants radio.

Les abonnés filaires ont à leur disposition les postes téléphoniques $8_1$ à $8_r$ et peuvent bénéficier entre eux ou entre eux et les abonnés de réseaux commutés extérieurs de tous les services que peut offrir un auto-commutateur téléphonique privé à savoir :
- l'appel automatique du correspondant (sauf pour les appels en provenance du réseau commuté extérieur), le renvoi, la mise en garde, le transfert, la mise aux abonnés absents/présents, le rappel automatique, l'accès automatique vers un autre auto-commutateur du même type par préfixe et routage auto-adaptatif, par numérotation abrégée, et par priorité. Les abonnés filaires peuvent ainsi, par simple numérotation, se placer en communication avec un des émetteurs-récepteurs $3_1$ à $3_q$ de la station 1 pour avoir accès à un réseau de combat disposant des émetteurs-récepteurs $2_1$ à $2_n$. Dans ce cas ils devront alors, quoi qu'utilisant un poste téléphonique classique, se plier aux règles d'exploitation habituelles d'un réseau radio de combat fonctionnant à l'alternat, à savoir que :
- l'appelant prend la parole en premier,
- l'appelant vérifie avant de parler, qu'il n'existe pas de conversation en cours, le locuteur en train de parler prévenant à la voix la fin de sa prise de parole,
- le temps de parole continue doit être inférieur à une durée déterminée par les règles normales d'exploitation radio.

Dans un cadre plus particulier d'exploitation de l'invention les postes des abonnés radio d'une station 1 peuvent être regroupés en grappes, chaque grappe étant définie par un ensemble d'abonnés radio disposant d'une partie des émetteurs-récepteurs $2_1$ à $2_n$, rassemblés sur une même fréquence si les postes utilisés ont des fréquences fixes, ou sur un même canal radio en évasion de fréquence (EVF) si les postes radio utilisés peuvent travailler sur des paliers de fréquence différents. Dans ces conditions une grappe sera dite raccordée à la station 1 si l'un des émetteurs de la station 1 est positionné sur sa fréquence ou sur son

4

canal et si son numéro d'identification est inscrit par l'opérateur dans l'auto-commutateur de la station 1.

L'intérêt du partage des émetteurs-récepteurs $2_1$ à $2_n$ en grappes radio est qu'il permet la formation de plusieurs réseaux radio de combat, c'est-à-dire le rassemblement de correspondants opérationnels pouvant communiquer sans délai entre eux à l'intérieur d'un même réseau en vue d'exécuter une même mission. Cependant le dispositif de la figure 1 permet également de constituer des grappes radio à partir de correspondants isolés qui n'ont pas spécialement à communiquer entre eux mais qui sont regroupés sur un même canal pour des motifs de gestion de fréquence ou d'économie entre émetteur-récepteur au niveau de la station 1.

L'emploi des terminaux d'abonnés mobiles $7_1$ à $7_n$ permet aux abonnés radio de lancer des communications au travers de la station 1, et de bénéficier des mêmes services que les abonnés téléphoniques filaires, à savoir l'appel automatique des abonnés filaires ou radio du réseau connecté à la station, ou le renvoi, la mise aux abonnés absents/présents, la numérotation d'abrégé, la priorité etc...

En revanche, tous les membres d'une grappe peuvent être appelés par un abonné téléphonique relié à la station 1 même s'ils ne disposent pas tous d'un terminal d'abonné mobile $7_1$ à $7_n$, mais ceux-ci devront dans ce cas assurer une écoute permanente de leur récepteur.

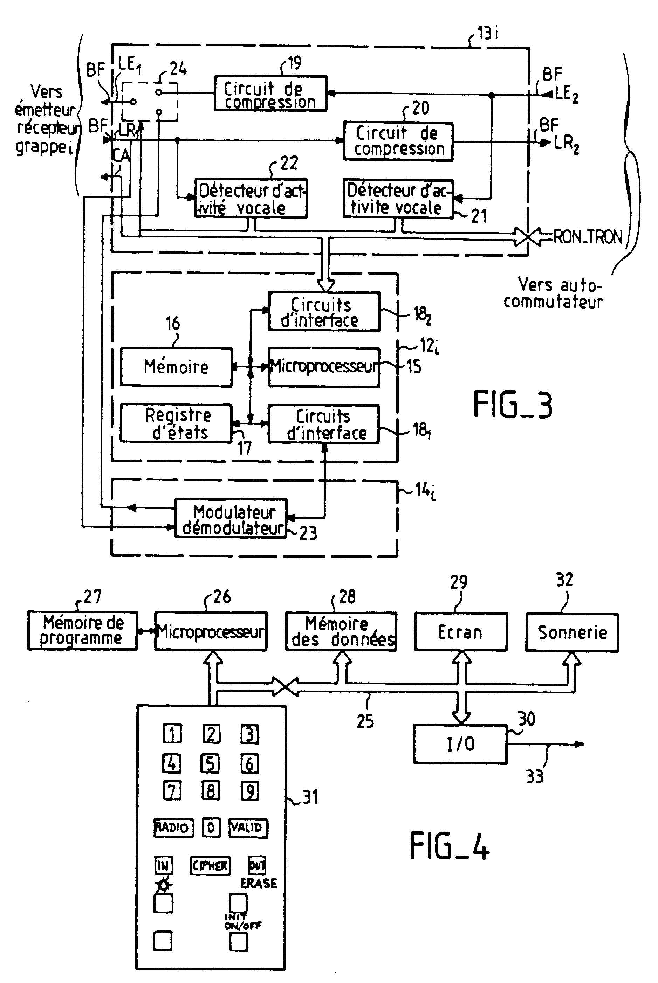

L'unité de raccordement représentée à la figure 2 comprend q blocs de couplage de grappes $11_i$, représentés à l'intérieur de rectangles en pointillés, comprenant respectivement une unité de traitement $12_i$, un circuit d'interface $13_i$ et un dispositif de signalisation $14_i$. Un mode de réalisation d'un bloc de couplage de grappes $11_i$ est représenté à la figure 3. Les éléments $12_i$, $13_i$ et $14_i$ de ce bloc sont représentés à l'intérieur d'une ligne fermée en pointillés. L'élément $12_i$ comprend, organisés de façon connue autour d'un microprocesseur 15 : une mémoire de programme et de données 16, un registre d'état 17 et des circuits d'interface $18_1$ et $18_2$ pour permettre le transfert d'informations de commande entre le circuit d'interface $13_i$ et le dispositif de signalisation $14_i$. Le circuit d'interface $13_i$ assure la transmission de la parole à niveau constant sur des lignes d'émission ($LE_1$, $LE_2$) et des lignes de réception ($LR_1$, $LR_2$) entre un poste émetteur-récepteur $3_i$ de la station 1 et l'auto-commutateur téléphonique 4 et comprend des circuits de compression des signaux de parole 19 et 20 et des détecteurs d'activité vocale respectivement d'émission et de réception 21 et 22. Le dispositif de signalisation $14_i$ comprend un modulateur-démodulateur de signaux FSK 23 (FSK étant l'abréviation anglo-saxonne de "Frequency Shift Keying") qui assure le couplage entre les circuits d'interface 18i du microprocesseur 15 et les lignes d'émission $LE_1$ et de réception $LR_1$ des signaux de parole reliant le circuit d'interface $18_1$ à l'émetteur-récepteur $3_i$. Le couplage du modulateur-démodulateur 23 ou du circuit de compression 19 sur la ligne d'émission $LE_1$ a lieu au travers d'un commutateur 24 commandé par les circuits d'interface $18_1$. Chaque élément décrit précédemment et composant un bloc de couplage de grappe $11_i$ fait partie des éléments connus de l'état de la technique et son mode de réalisation n'a pas besoin d'être plus longuement détaillé.

Chaque bloc de couplage $11_i$ est relié au commutateur téléphonique 4 au moyen de lignes de signalisation RON et TRON qui transportent dans les deux sens les signaux de signalisation entre l'auto-commutateur 4 et l'unité de raccordement 5.

Les messages de signalisation échangés avec l'auto-commutateur 4 sont appliqués au microprocesseur 15 au travers des circuits d'interface $18_2$. Les messages de signalisation sont codés sous la forme d'une combinaison d'impulsions élémentaires correspondant aux différents types de messages échangés.

Les messages échangés sur la ligne RON TRON sont par exemple les suivants :
- PRISE : message de prise de ligne
- INVTR : invitation à transmettre un numéro.
- ABNIN : indication abonné non inscrit.
- ACCEP : acceptation d'une demande de service.
- REFUS : refus d'une demande de service.
- REBOU : information de rebouclage radio.
- REPON : réponse de l'abonné demandé.
- LIBER : message de libération de ligne.
- NUMDE : numéro de demande de service ( 1 à 9 chiffres).
- NUMDR : numéro de l'abonné radio demandé (3 chiffres).
- NUMER : numéro de l'abonné radio demandé (3 chiffres).

Les messages PRIS, INVTR, REFUS, et REPON sont codés par le microprocesseur 15 et/ou l'auto-commutateur numérique 4 suivant la norme française "NEF" sous la forme d'une seule impulsion de durée nominale 100 millisecondes. Le message ACCEP est codé par le microprocesseur 15 et/ou l'auto-commutateur 4 sous la forme de deux impulsions de 100 millisecondes séparées par un blanc de 100 millisecondes. Les messages ABNIN, REBOU et LIBER sont codés par le microprocesseur 15 et/ou l'auto-commutateur 4 sous la forme d'une impulsion de durée nominale 200, 350 et 625 millisecondes respectivement. Les messages NUMDE, NUMDR et NUMER sont codés au moyen de 1 à 10 impulsions au rythme de 10 périodes par seconde, deux chiffres consécutifs étant séparés par un blanc de 150 millisecondes.

Dans ces conditions l'ouverture de ligne à un demandeur s'effectue de la manière suivante. Le message PRISE est envoyé par le demandeur, et le demandé répond par le message INVTR après un temps compris entre 150 et 200 millisecondes.

Si le demandeur est l'unité de raccordement 5 celle-ci fournit le numéro de l'abonné demandeur NUMDR après un délai qui peut varier entre 0 et 150 millisecondes après réception du message INVTR. Le commutateur 4 répond dans un délai de 150 millisecondes par un message compte-rendu de type ACCEP, REFUS, ou de demandeur non inscrit.

En cas de refus l'unité de raccordement 5 répond par un message de libération LIBER dans un délai de 150 millisecondes.

Dans les deux autres cas (acceptation ou demandeur non inscrit) l'unité de raccordement émet une demande de service dans un délai de 150 millisecondes.

Si le demandeur est l'auto-commutateur 4, celui-ci fournit le numéro de l'abonné demandé NUMER dans un délai de 0 à 150 millisecondes après réception du signal INVTR. L'unité de raccordement répond dans un délai de 150 millisecondes par un message d'acceptation ACCEP.

La demande de service est effectuée par l'émission du message NUMDE auquel il est répondu dans un délai d'environ 150 millisecondes par un message compte-rendu d'acceptation ACCEP ou de REFUS, voire de demandé non inscrit ou de rebouclage REBOU.

En cas d'acceptation, celui qui a émis l'appel attend un message de réponse (REPON) qui doit lui parvenir dans un délai déterminé. Enfin la fermenure de ligne peut être effectuée à tout moment par l'un ou l'autre des équipements. Elle est effectuée par l'émission du message LIBER.

Un exemple de réalisation d'un terminal mobile $7_i$ représenté à la figure 4. Il comprend, organisés de façon connue autour d'un bus de données et d'adresse 25, un microprocesseur 26 et sa mémoire de programme 27, une mémoire de données 28, un écran de visualisation 29, un port d'entrée/sortie 30, un ensemble clavier de numérotation 31 et une sonnerie 32. Le port 30 est relié par un cordon 33 à l'émetteur-récepteur $2_i$ correspondant. L'ensemble clavier de numérotation 31 comporte à la manière des cadrans d'appel téléphonique un ensemble de 10 touches de numérotation, numérotées de 0 à 9, un ensemble de 6 touches de fonction qui sont :

une touche RESCUE/INIT, une touche IN, une touche OUT/ERASE, une touche RADIO, une touche VALID et une touche CIPHER.

La touche RESCUE/INIT sert à l'initialisation du terminal d'abonné mobile $7_i$ ou à la mise en oeuvre de procédures de recueil. La touche IN permet d'arrêter la sonnerie du terminal d'abonné mobile $7_i$ et engendre un signal d'acquittement de la demande de communication vers la station 1. La touche OUT/ERASE signale la fin des communications et annule les appuis touches précédents. La touche RADIO permet d'exécuter des rappels de l'intérieur d'une même grappe et permet la mise en oeuvre de la protection de grappes. La touche VALID permet de valider l'envoi des messages. Enfin la touche CIPHER permet la gestion du mode de fonctionnement cryptophonique des émetteurs-récepteurs $2_i$ lorsque ceux-ci munis de dispositifs de chiffrement.

Le rôle d'un terminal mobile $7_i$ est d'assurer les signalisations nécessaires à l'établissement d'une communication, soit directement de terminal à terminal soit entre un terminal et sa station 1 de raccordement (appel entre deux grappes distinctes ou entre une grappe et un abonné filaire). Il permet également de délivrer à l'utilisateur les tonalités et indications visuelles sur un écran de visualisation 29 pour lui permettre de suivre les procédures.

Le principe de la numérotation est le suivant. Quelque soit l'abonné filaire du réseau téléphonique ou le correspondant radio d'une station de raccordement celui-ci est identifié par la station 1 par un numéro personnel de 5 ou 6 chiffres QMCDU où QM représente l'indicatif de la station de raccordement et CDU le numéro d'abonné ou de correspondant. A titre indicatif pour un abonné filaire ou un correspondant radio isolé le numéro CDU peut être un numéro d'identification à trois chiffres. Pour les correspondants radio les chiffres CD correspondent à l'identification de leur grappe, ces chiffres étant communiqués à la station lors de l'inscription de la grappe. Le chiffre U correspond à leur numéro compris par exemple entre 1 et 9, au sein de leur grappe qu'ils indiquent lors de l'initialisation du terminal d'un abonné mobile $7_i$. Dans ce cas les chiffres 1 et 2 peuvent particulariser au niveau des procédures un chef de réseau et son adjoint par exemple.

L'inscription des abonnés dans la mémoire 16 de l'unité de raccordement a lieu de la façon suivante. Pour un abonné filaire du réseau téléphonique le numéro d'identification doit être prévu dans l'annuaire de l'opérateur et inscrit dans la mémoire 16 de la station de raccordement avec ses caractéristiques de priorité, d'autorisation ou non de sortie du réseau, de renvoi autorisé ou non et d'inscription effective ou à confirmer. Pour les abonnés radio, l'inscription réalisée par l'opérateur de la station 1 est globale par grappe (CD identique) avec des caractéristiques pré-programmées telles que CD1 avec priorité 2 pour un chef de réseau, CD0 pour permettre un appel collectif de la grappe avec priorité n° 1 et CD2 à 9 pour chaque membre du réseau avec la priorité 1, tous ayant la possibilité de renvoi autorisé et d'inscription effective. Les abonnés radio disposent également comme les abonnés filaires de la faculté de se mettre aux abonnés absents en composant sur le clavier d'un terminal mobile $7_i$ la numérotation 8CDU VALID ou éventuellement la numérotation 7CDU VALID pour la réinscription aux abonnés absents. D'une façon générale les différents préfixes suivants peuvent être utilisés : 0 pour la mise en communication avec l'opérateur de la station 1, 1 pour effectuer un appel vers un réseau commuté extérieur, 7 pour permettre l'appel entre abonnés d'une même station ou une réinscription après avoir été placé aux abonnés absents, 2 pour l'appel entre abonnés de stations différentes, 8 pour la mise aux abonnés absents et 9 pour effectuer une demande de mise en ouevre de la priorité attribuée à l'utilisateur.

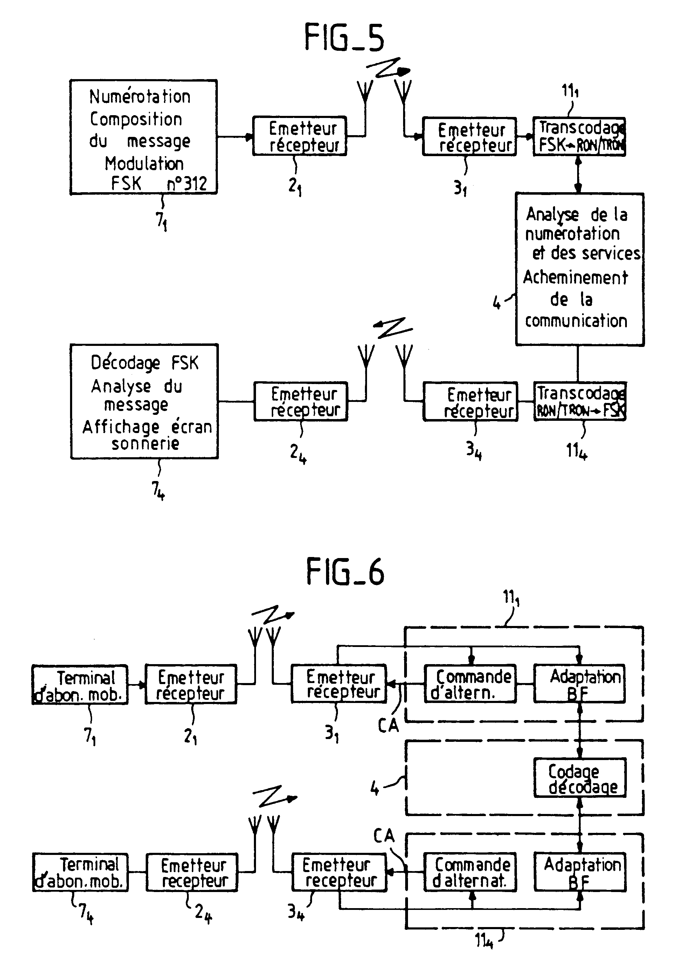

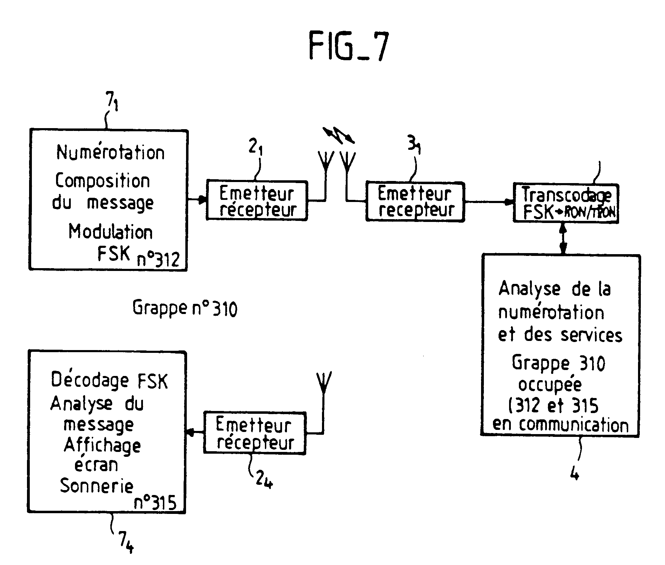

Un exemple de communciation entre abonnés du réseau radio est figuré aux figures 5, 6 et 7. La figure 5 représente un synoptique fonctionnel simplifié de l'établissement d'une communication entre abonnés radio disposant l'un, d'un terminal d'abonné mobile $7_1$ et l'autre du terminal d'abonné $7_4$, l'abonné ayant le terminal $7_1$ composant la numérotation du terminal $7_4$. L'abonné du terminal d'abonnés mobiles $7_4$ qui est appelé décroche et envoie une information correspondante à l'auto-commutateur téléphonique 4 au travers du bloc de couplage de grappe $11_4$ ce qui a pour effet d'établir la communication entre les deux abonnés en autorisant la liaison par phonie entre les émetteurs-récepteurs des deux abonnés et la station 1. La communication établie répond au schéma synoptique fonctionnel de la figure 6. Sur cette figure les échanges entre les correspondants s'effectuent suivant la procédure radio habituelle à l'alternat entre chaque émetteur-récepteur d'abonné et les voies correspondantes aux blocs de couplage de grappe $11_1$ et $11_4$. La station 1 joue alors le rôle de relais. Les alternats des postes émetteurs-récepteurs sont alors commandés par la détection d'une activité vocale par les détecteurs d'activité vocale de réception et d'émission. La communication s'arrête par le raccroché d'un des deux correspondants. Enfin sur la figure 7 un exemple de communication radio intragrappe est représenté. Dans cet exemple qui correspond au cas où un abonné de numéro 312 appelle un autre abonné de numéro 315 dans la grappe n° 310. Dans ce cas les échanges de signalisation ont lieu entre les terminaux mobiles de chacun des abonnés mais la station 1 intercepte la signalisation du terminal mobile de l'abonné 312 qui est enregistré dans l'auto-commutateur téléphonique 4 pour indiquer que la grappe 310 est occupée.

Les fonctionnements précédents peuvent être obtenus en programmant chaque microprocesseur $12_i$ d'une unité de raccordement suivant un modèle à treize états stables suivant lesquels il peut rester indéfiniment et suivant 8 états instables d'où il sort obligatoirement au bout d'un certain temps de façon à éviter de bloquer les procédures en cours. A tout moment l'état d'une procédure en cours exécutée par un microprocesseur est inscrit dans son registre d'état 17. Les états stables sont les suivants :

R est l'état repos (aucune communication n'est en cours)

S est l'état qui permet de signaler qu'une communication extragrappe est en cours

CINTRA est l'état qui permet de signaler qu'une communication générale intragrappe en cours est déclarée à l'auto-commutateur 4

CICT est l'état qui permet de signaler qu'une communication générale intragrappe en cours est ignorée de l'auto-commutateur 4

CICTT est l'état qui permet de signaler qu'une communication générale intragrappe en cours est ignorée de l'auto-commutateur et est temporairement en attente d'insertion

CINSERT est l'état qui permet de signaler qu'une communication générale intragrappe a lieu avec un abonné extragrappe

CEXTRA est un état qui permet de signaler le déroulement d'une communication générale extragrappe à l'initiative d'un abonné extérieur à la grappe

I est l'état qui permet de signaler qu'une communication individuelle intragrappe a lieu

IICT est l'état qui permet de signaler qu'une communication individuelle intragrappe en cours est ignorée de l'auto-commutateur 4

PINTRA est l'état qui signale qu'une grappe en cours de communication est protégée contre toute insertion

PEXTRA est l'état signalant qu'un réseau de circonstances protégé est créé

PICTT est l'état qui signale qu'une grappe en cours de communication est protégée et est ignorée de l'auto-commutateur 4 temporairement jusqu'à l'arrivée d'une insertion

enfin PINSERT est l'état qui signale le fait qu'un abonné extragrappe est inséré dans les communications d'une grappe.

Les huit états instables sont les suivants :

"1" est l'état d'attente de numérotation de l'auto-commutateur

"1P" est l'état d'attente de numérotation de l'auto-commutateur alors qu'une protection de grappe est en cours

"1C" est l'état d'attente de numérotation de l'auto-commutateur alors qu'une communication générale est en cours

"2" est l'état d'attente du décroché d'un terminal d'abonnés mobiles sur un appel extragrappe

"3.0" est l'état d'attente de l'envoi par l'auto-commutateur 4 de l'invention à transmettre le numéro du demandeur

"3.1" est l'état d'attente de l'envoi par l'auto-commutateur d'un compte-rendu sur le numéro du terminal demandeur

"3.2" est l'état d'attente de l'envoi par l'auto-commutateur 4 du compte-rendu d'une demande de service

"4" est l'état d'attente du décroché de l'abonné extragrappe demandé.

Chaque microprocesseur 15 de l'unité de raccordement radio 5 est accessible selon 19 requêtes qui sont:

| APSTR | <-- | Appel individuel extragrappe |
| APRDC | <-- | Appel individuel intragrappe |
| APCNF | <-- | Appel général intragrappe |
| APPDG | <-- | Demande de mise en protection |
| DECRO | <-- | Décroché du terminal |
| FINPDG | <-- | Demande de fin de protection |
| FINCO | <-- | Raccroché du terminal |
| CIPHER | <-- | Demande de changement de mode de chiffrement de la liaison radio |
| F-ALT | <-- | Relaché de l'alternat |
| OUT | <-- | Libération de la grappe par l'opérateur de la station 1 |
| --> | IMPUL | Message reçu du commutateur sous la forme d'une impulsion de 100 ms. Selon l'état d'avancement de la procédure en cours cette impulsions est interprétée comme PRISE, INVTR, REFUS ou REPON |
| --> | NUMER | Numéro de l'abonné radio demandé |
| --> | ACCEP | Acceptation de la demande de service |
| --> | ABNIN | Abonné demandé ou demandeur non inscrit |
| --> | REBOU | Commande de rebouclage. L'abonné demandé appartient à la grappe du demandeur |
| --> | LIBER | Libération de la communication en cours |

8

par

par le commutateur

| | | |
|---|---|---|
| ABSAV | | Absence d'activité vocale sur le segment radio pendant un intervalle de temps déterminé |
| TEMPO | | Echéance de temporisation. |

Les requêtes avec une flèche --- sont celles reçues de l'auto-commutateur 4 alors que celles avec une flèche --- sont celles reçues d'un terminal d'abonné mobile $7_j$ ou de l'opérateur de la station 1. Les 2 dernières requêtes sont internes.

Les microprocesseurs 15 de l'unité de raccordement 5 génèrent des réponses aux requêtes précédentes. Ces réponses sont les suivantes :

| | | |
|---|---|---|
| APSTR | --->  | Appel individuel extragrappe |
| APINT | --->  | Appel individuel intragrappe lancé en appel extragrappe |
| APCNF | --->  | Appel général extragrappe |
| APPDG | --->  | Indication de mise en protection de grappe |
| APRCP | --->  | Indication de mise en réseau de circonstance protégé |
| DECRO | --->  | Décroché de l'abonné demandé |
| AC-SER | --->  | Acceptation de la demande de service du terminal |
| FINPDG | --->  | Indication de fin de protection de grappe ou de réseau de circonstance protégé |
| FINCO | --->  | Fin de la communication suite à un raccroché du terminal |
| FINSERV | --->  | Acceptation de la demande de service effectué par le terminal |
| REFUS1 | --->  | Refus de l'appel lancé par le terminal car grappe de communication |
| REFUS2 | --->  | Refus de l'appel lancé par le terminal pour demande de service impossible à satisfaire |

| | | |
|---|---|---|
| REFUS3 | ---> | Refus de l'appel lancé par le terminal car appelant non inscrit |
| REFUS4 | ---> | Refus de l'appel lancé par le terminal car appelé non inscrit |
| <--- | IMPUL | Message émis sous la forme d'une impulsion de 100 ms. Selon l'état d'avancement de la procédure en cours, le commutateur interprète cette impulsion comme PRISE, INVTR ou REPON |
| <--- | ACCEP | Acceptation du numéro demandé par le commutateur à la grappe |
| <--- | NUMDR | Numéro du terminal demandeur de la demande de service |
| <--- | NUMDE | Demande de service passée par le TREC 860 |
| <--- | LIBER | Libération de la communication en cours |
| CRYPTO | ---> | Positionnement de l'équipement de cryptophonie associé après une demande de changement de mode en fonctionnement par un terminal |

Les requêtes avec une flèche --- sont celles émises vers l'auto-commutateur 4 alors que celles avec une flèche --- sont celles émises vers le terminal.

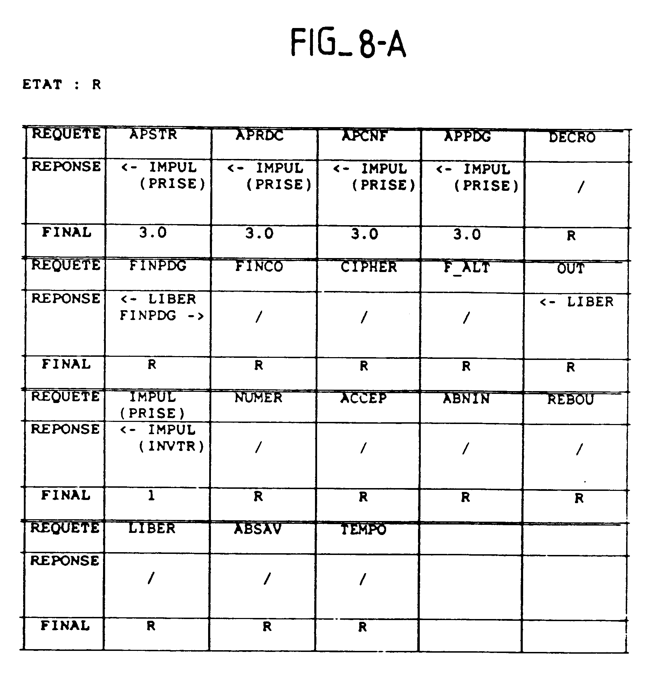

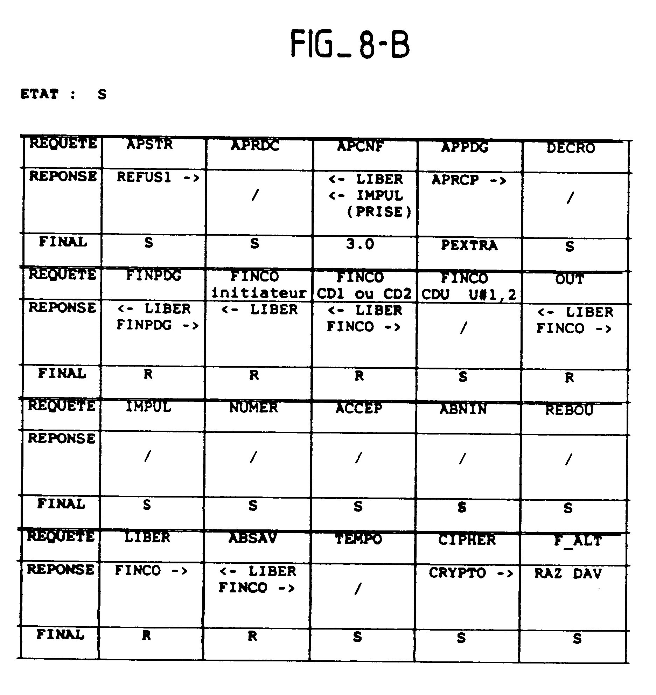

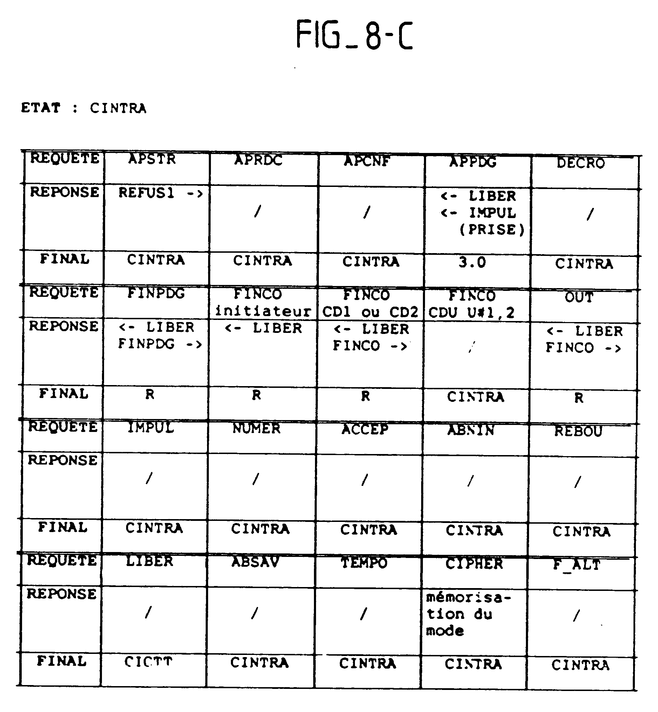

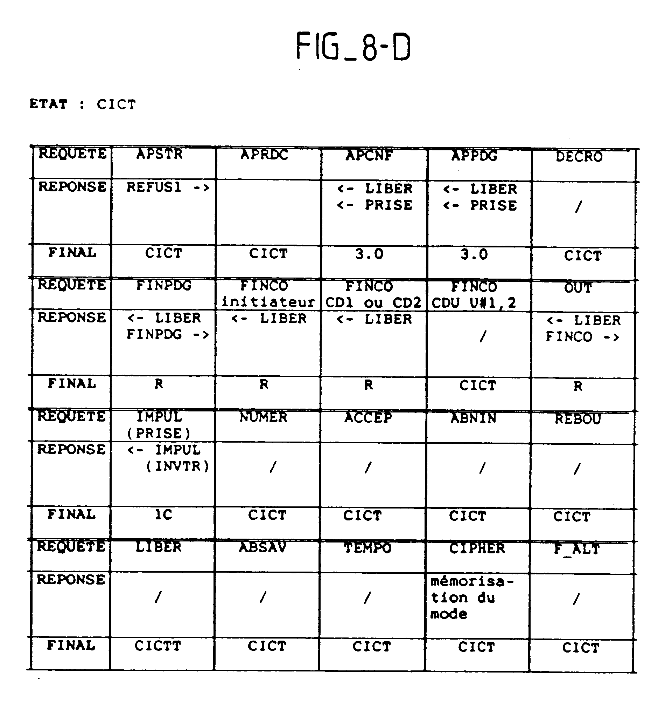

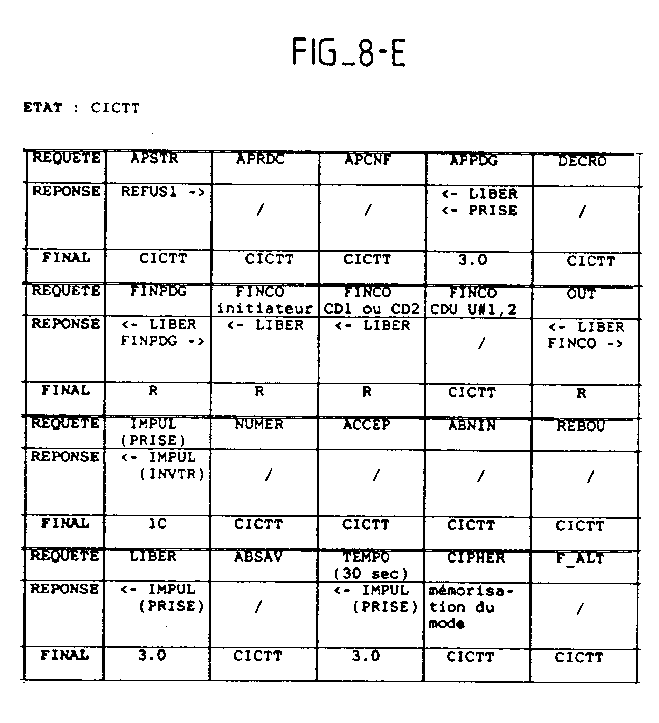

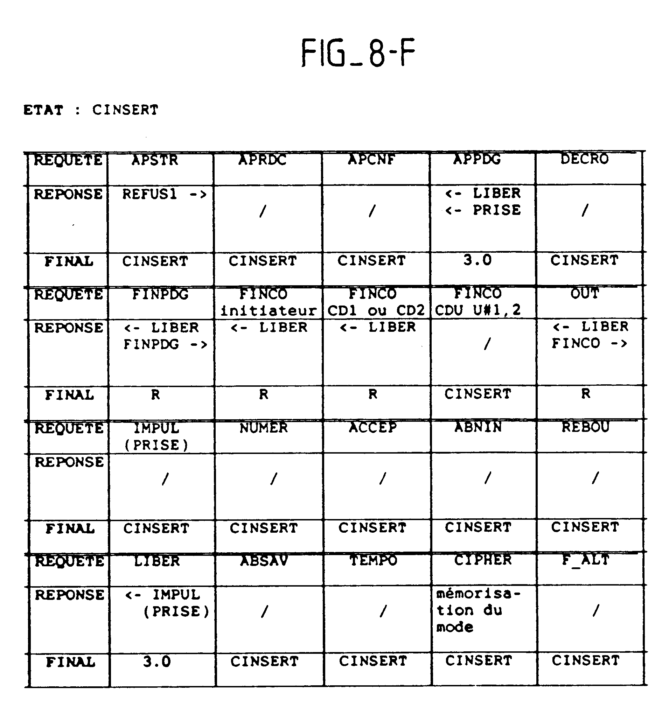

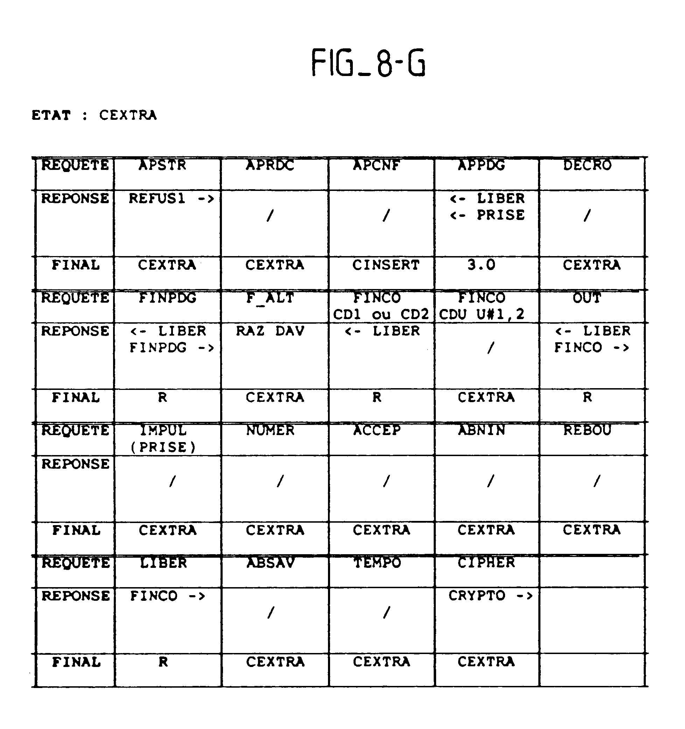

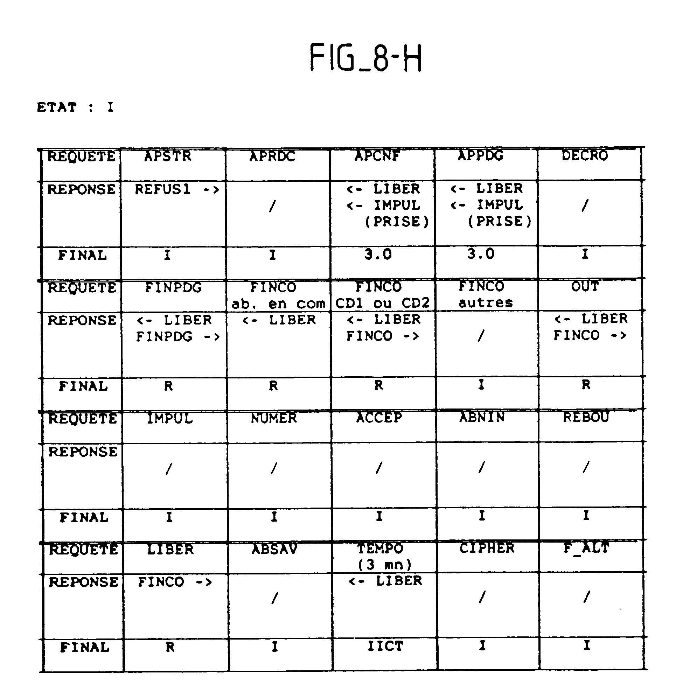

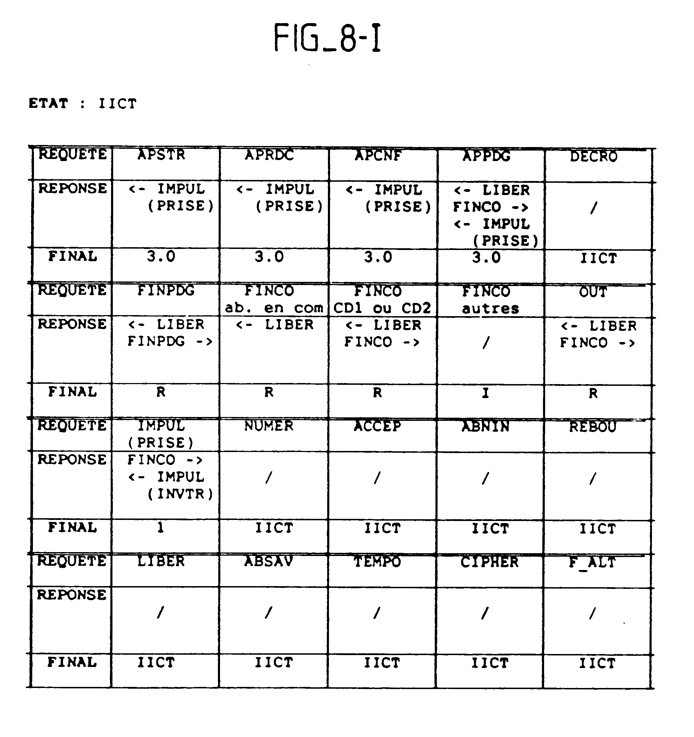

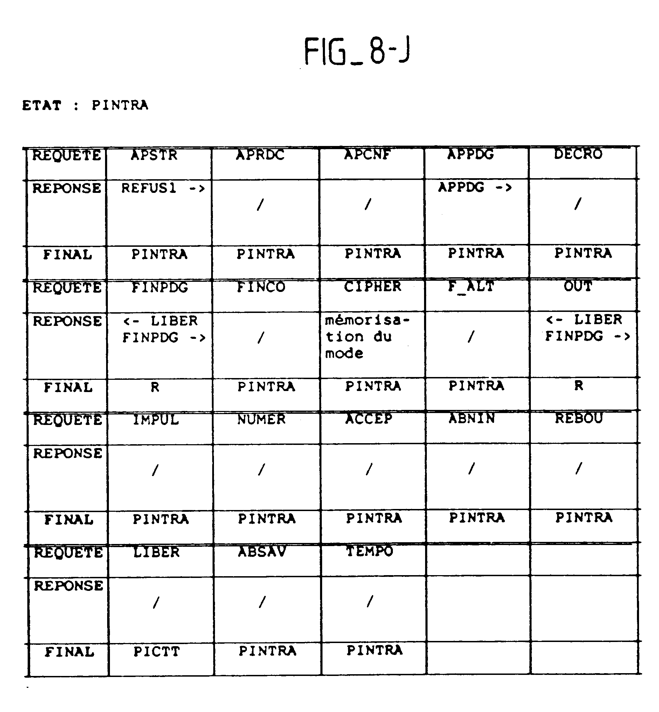

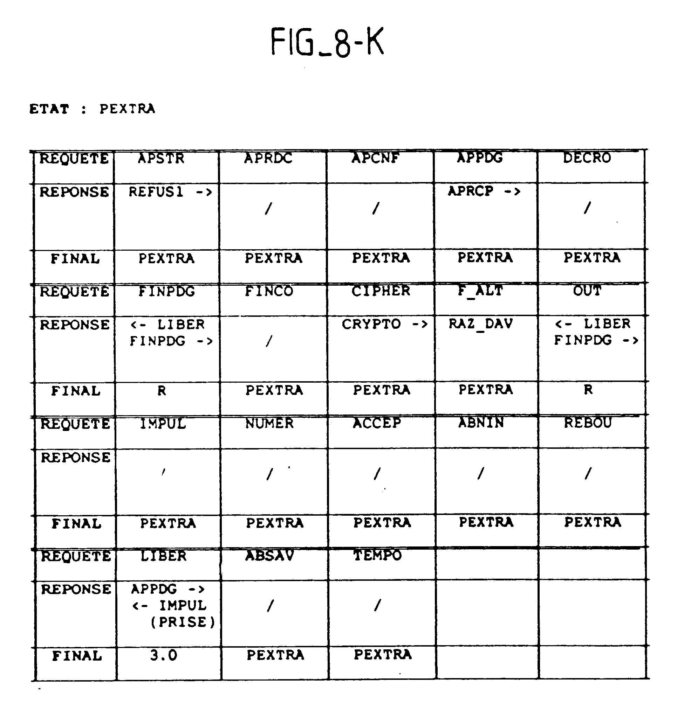

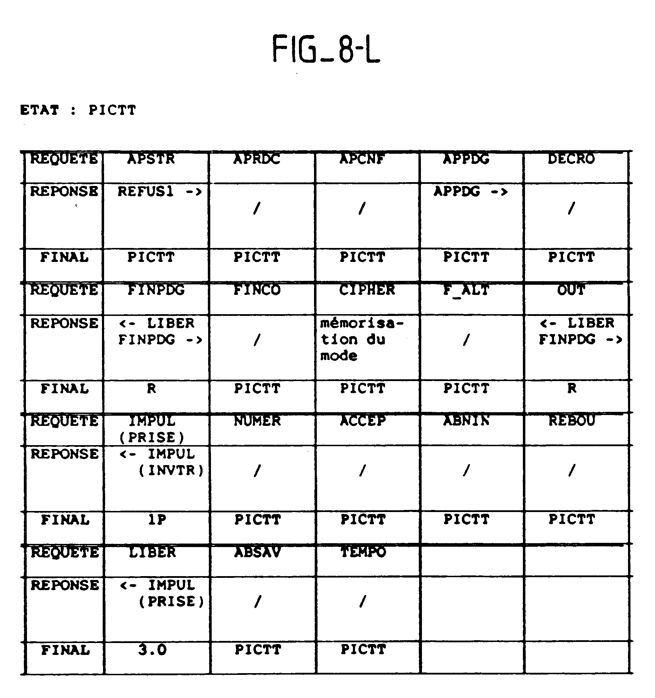

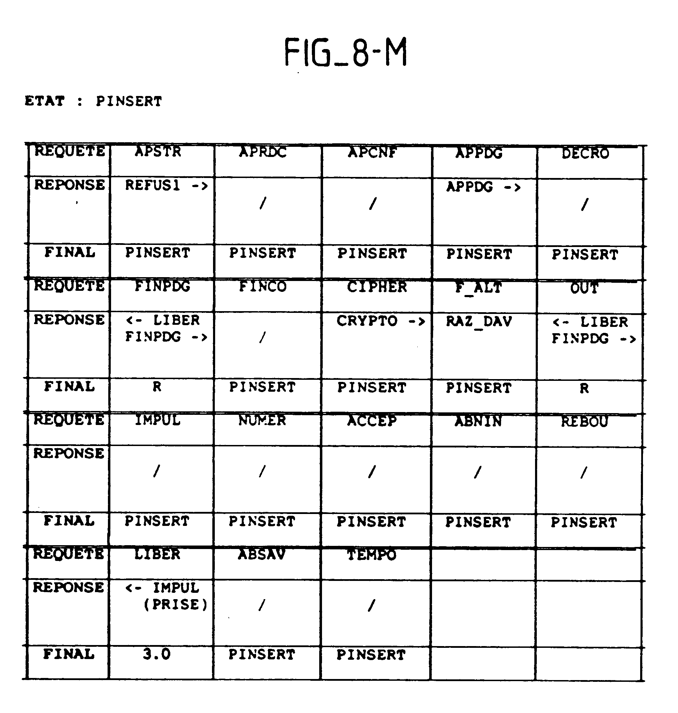

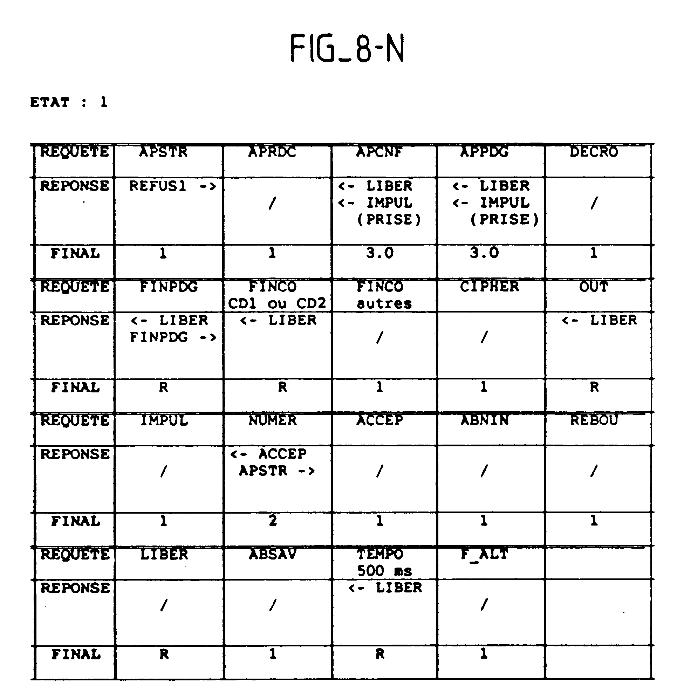

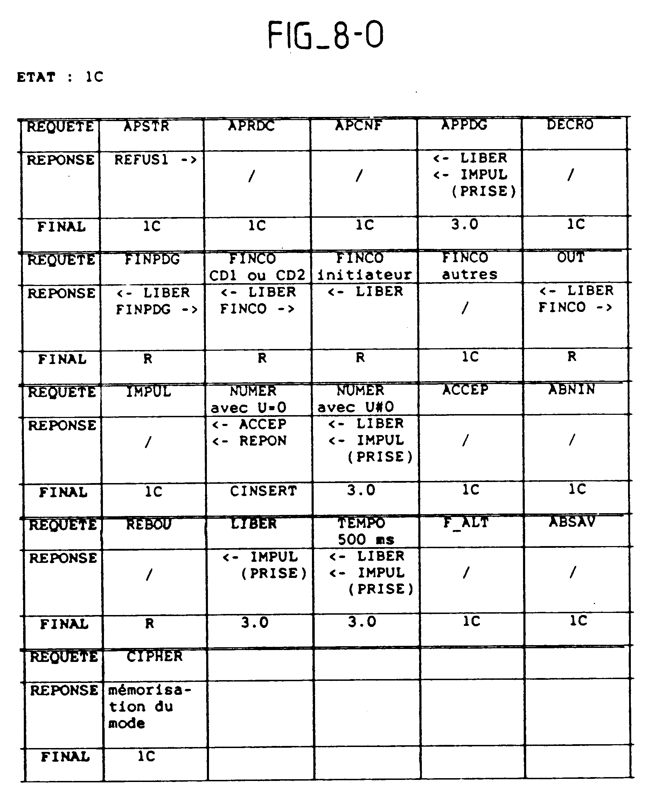

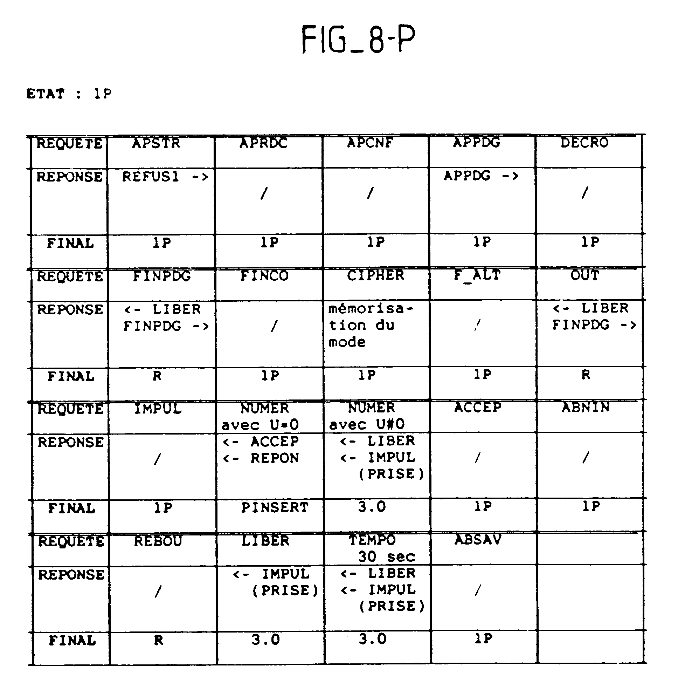

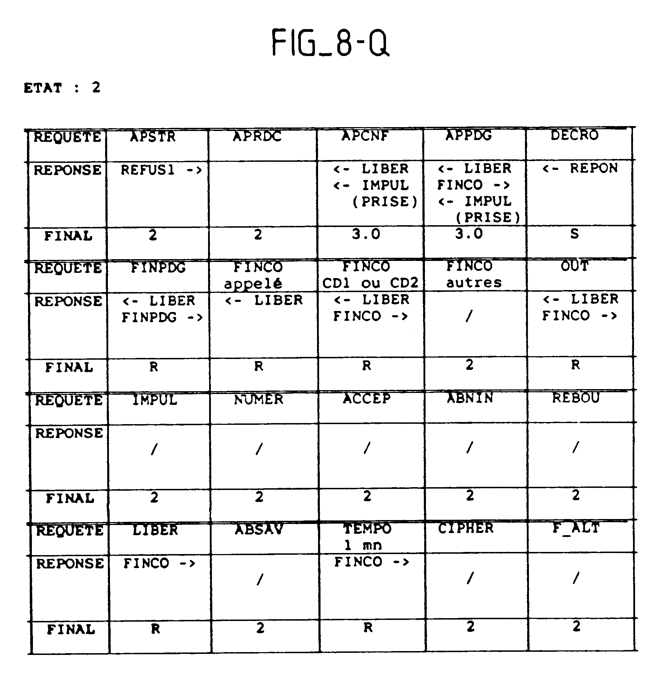

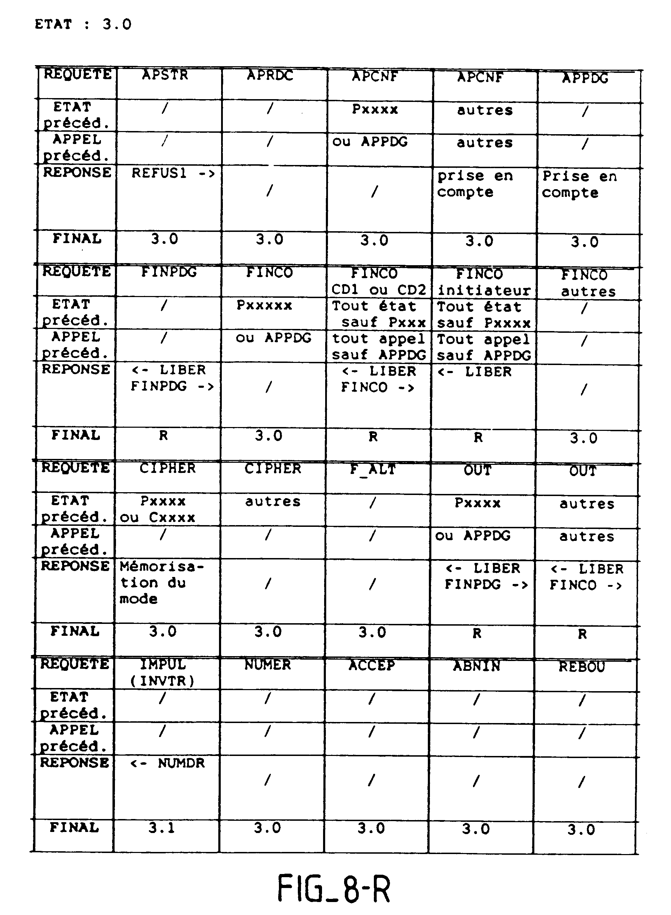

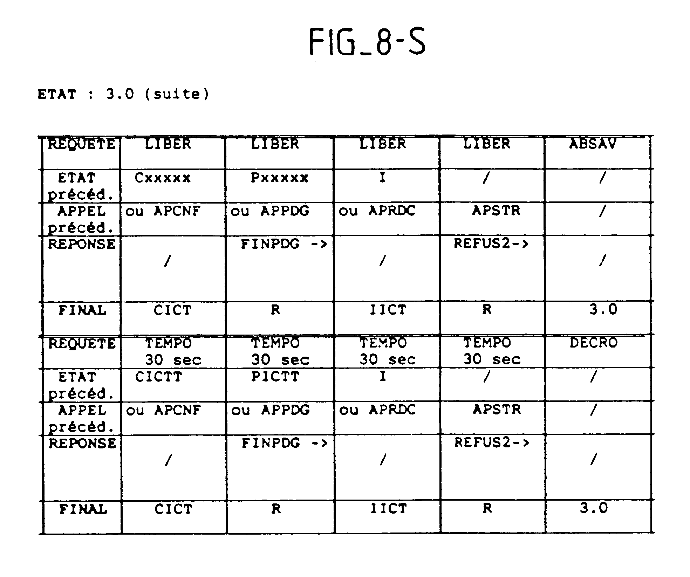

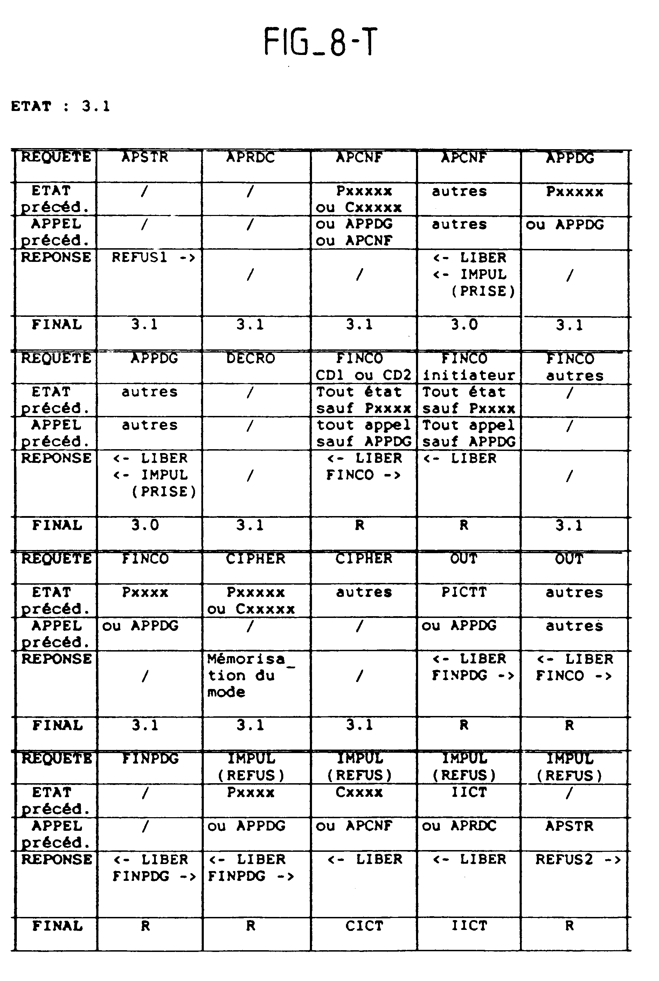

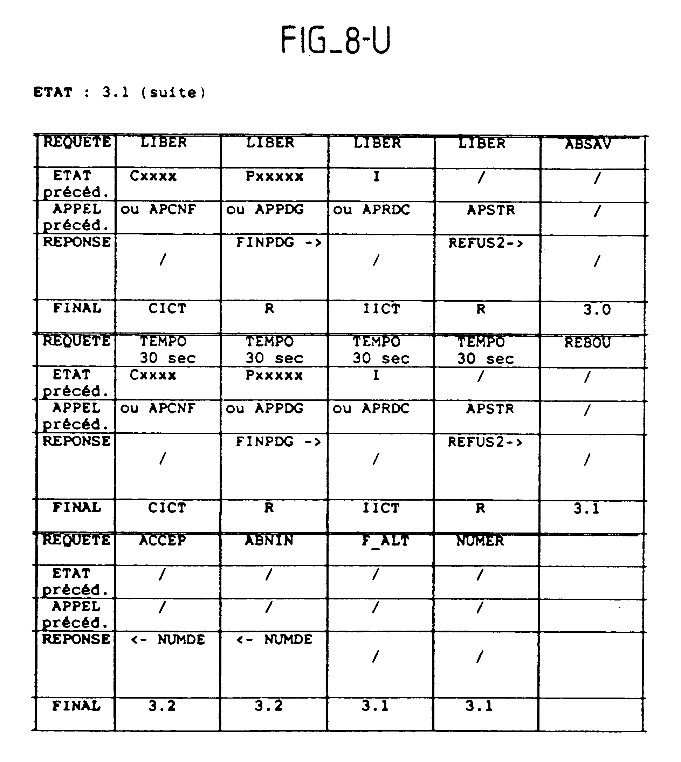

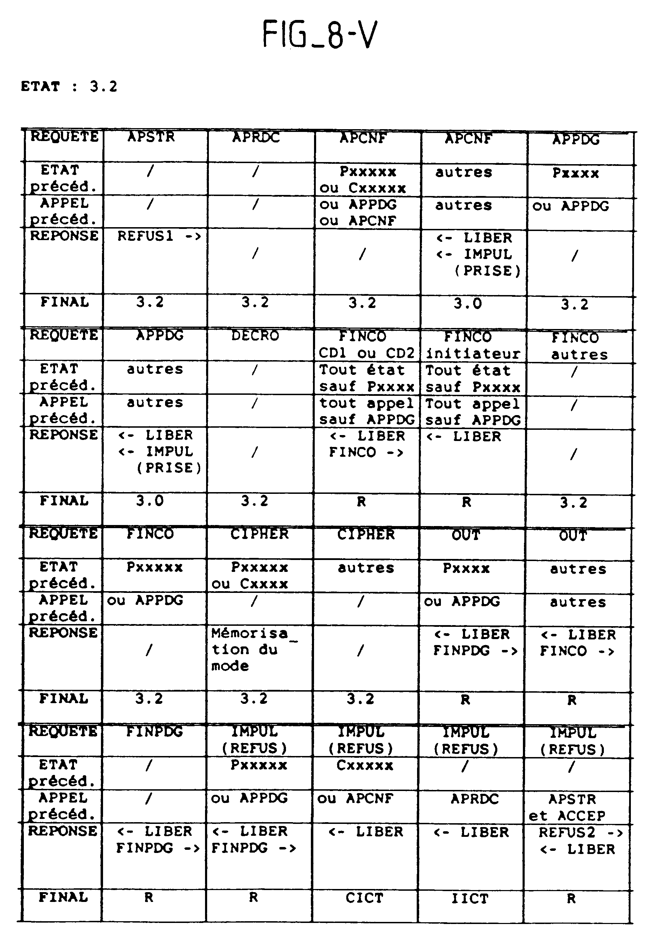

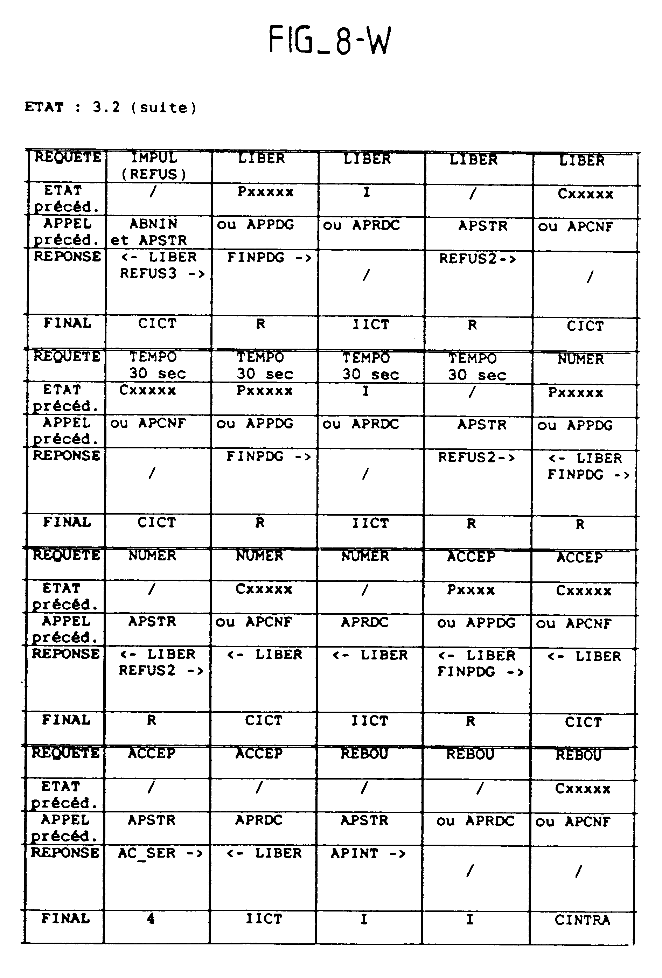

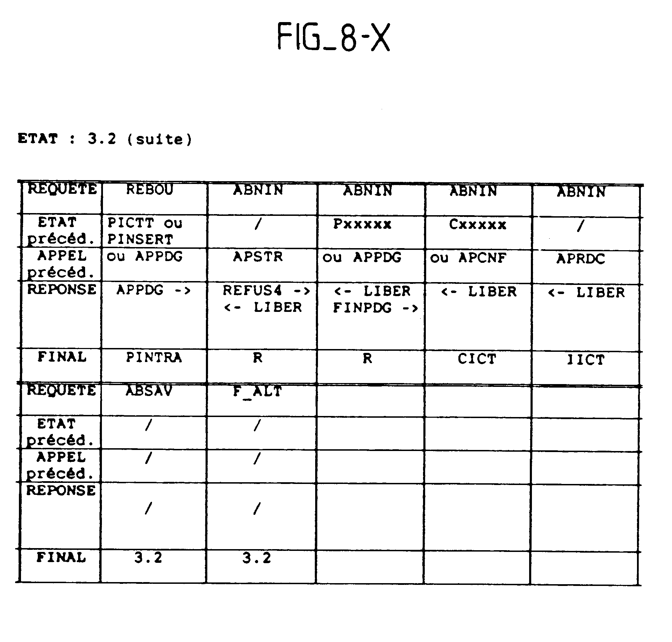

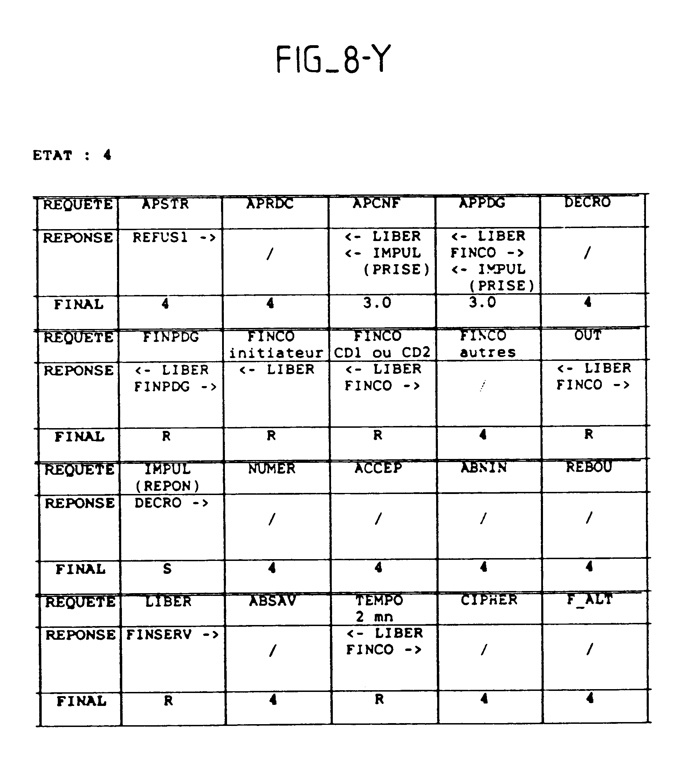

La programmation des microprocesseurs 15 pour obtenir les changements d'états décrits précédemment en fonction des requêtes faites à l'unité de raccordement 5 est illustrée par les tableaux des figures 8A à 8Y. Ces programmes sont inscrits dans les mémoires 16 de chaque microprocesseur 15.

**Revendications**

**1.** Dispositif pour l'établissement et l'acheminement de communications téléphoniques entre abonnés d'un réseau radio et/ou d'un réseau téléphonique filaire ($8_1 \ldots 8_r$, 9) dans lesquels les abonnés du réseau radio disposent de postes émetteurs-récepteurs radio ($2_1 \ldots 2_n$) fonctionnent à l'alternat et les abonnés des deux réseaux disposent de moyens de numérotation ($8_1 \ldots 8_r$, 31) pour appeler leurs correspondants, du type comprenant un auto-commutateur téléphonique (4) couplé au réseau téléphonique filaire au moyen de lignes téléphoniques filaires, l'auto-commutateur (4) étant couplé au réseau téléphonique radio au moyen d'une pluralité d'émetteurs-récepteurs radio ($3_1 \ldots 3_4$) au travers d'une unité de raccordement radio (5), comprenant des unités de traitement, chaque unité de traitement ($12_i$) étant programmée pour permettre une organisation du réseau d'abonnés radio en grappes d'abonnés radio communiquant sur une même fréquence et/ou sur un même canal de transmission, les communications pouvant avoir lieu entre abonnés dans une même grappe ou entre abonnés appartenant à des grappes différentes, caractérisé en ce que l'unité de raccordement radio (5) comprend une pluralité déterminée d'unités de traitement programmées ($12_i$) reliées chacune à un émetteur-récepteur par l'intermédiaire d'un circuit d'interface ($13_i$) et un modulateur de signal (23) commandé par le circuit d'interface pour transmettre les signaux de parole entre l'émetteur-récepteur et le circuit d'interface, le circuit d'interface ($13_i$) comportant des détecteurs d'activité vocale (22) pour permettre la transmission des appels dans un mode à l'alternat entre d'une part, les abonnés du réseau de radiotéléphone et entre les abonnés des deux réseaux d'autre part, chaque unité de traitement ($12_i$) étant programmée suivant des niveaux d'autorisation hiérarchiques pour permettre une organisation du réseau d'abonnés radio en groupes d'abonnés radio communiquant sur une même fréquence et/ou sur le même canal de

10

transmission, les appels pouvant avoir lieu entre les abonnés d'un même groupe ou entre abonnés appartenant à différents groupes, ou entre abonnés appartenant à un groupe et les abonnés du réseau téléphone filaire.

2. Dispositif selon la revendication 1 caractérisé en ce que chaque unité de traitement ($12_i$) est programmée pour permettre aux abonnés téléphoniques d'effectuer des appels sélectifs automatiques des abonnés radio.

3. Dispositif selon l'une quelconque des revendications 1 et 2 caractérisé en ce que chaque unité de traitement est programmée pour permettre aux abonnés téléphoniques de s'insérer automatiquement discrètement dans les communications des abonnés du réseau radio.

4. Dispositif selon l'une quelconque des revendications 1 à 3 caractérisé en ce que chaque unité de traitement ($12_i$) est programmée pour permettre aux abonnés du réseau radio d'effectuer un appel automatique sélectif de n'importe quel autre abonné du réseau radio et/ou du réseau téléphonique filaire.

5. Dispositif selon l'une quelconque des revendications 1 et 4 caractérisé en ce que chaque unité de traitement ($12_i$) est programmée pour permettre aux abonnés radio d'effectuer des appels automatiques collectifs des autres abonnés radio.

6. Dispositif selon l'une quelconque des revendications 1 à 5 caractérisé en ce que chaque unité de traitement ($12_i$) est programmée pour protéger les abonnés du réseau radio des appels des abonnés du réseau téléphonique filaire.

7. Dispositif selon la revendication 6 caractérisé en ce que chaque unité de traitement ($12_i$) est programmée pour permettre aux abonnés appartenant à deux grappes d'être en communication permanente en étant protégés du réseau téléphonique filaire des autres grappes afin de créer des réseaux de circonstances protégés.

8. Dispositif selon la revendication 7 caractérisé en ce que chaque unité de traitement ($12_i$) est programmée pour permettre à des abonnés prioritaires d'exercer un droit de préemption sur une communication établie entre abonnés du réseau radio.

9. Dispositif selon l'une quelconque des revendications 1 à 8 caractérisé en ce que chaque unité de traitement ($12_i$) est programmée pour couper les communications entre abonnés dont un au moins est radio, dans un délai déterminé suivant une absence d'activité vocale détectée par les moyens de détection d'activité vocale.

10. Dispositif selon l'une quelconque des revendications 1 à 9 caractérisé en ce que chaque unité de traitement est programmée selon une table ayant des états stables et instables, pouvant être lue dans un registre d'état pour permettre une organisation du réseau d'abonnés radio en grappes d'abonnés communiquant sur une même fréquence et/ou sur un même canal de transmission, les appels pouvant avoir lieu entre abonnés d'une même grappe ou entre abonnés appartenant à différentes grappes ou entre abonnés appartenant aux grappes et aux abonnés du réseau téléphonique filaire, chaque table comprenant :
   - un premier état "R" ou état de repos indiquant qu'aucune communication n'est en cours
   - un deuxième état "S" indiquant qu'une communication extragrappe est en cours
   - un troisième état "CINTRA" pour signaler qu'une communication générale intragrappe en cours est déclarée à l'auto-commutateur (4)
   - un quatrième état "CICT" pour signaler qu'une communication générale intragrappe en cours est ignorée de l'auto-commutateur (4) et est temporairement en attente d'insertion
   - un cinquième état "CICTT" pour signaler qu'une communication générale intragrappe en cours est ignorée de l'auto-commutateur (4) et est temporairement en attente d'insertion
   - un sixième état "CINSERT" pour signaler qu'une communication générale intragrappe a lieu avec un abonné extragrappe
   - un septième état "CEXTRA" pour signaler le déroulement d'une communication générale extragrappe à l'initiative d'un abonné extérieur à la grappe

- un huitième état "I" pour signaler qu'une communication individuelle intragrappe a lieu
- un neuvième état "IICT" pour signaler qu'une communication individuelle intragrappe en cours est ignorée de l'auto-commutateur (4)
- un dixième état "PINTRA" pour signaler qu'une grappe en cours de communication est protégée contre toute insertion
- un onzième état "PEXTRA" pour signaler qu'un réseau de circonstance protégé est créé
- un douzième état "PICTT" pour signaler qu'une grappe en cours de communication est protégée et est ignorée de l'auto-commutateur (4) temporairement jusqu'à l'arrivée d'une insertion
- un treizième état "PINSERT" pour signaler le fait qu'un abonné extragrappe s'est inséré dans la communication d'une grappe

et des états instables comportant :

- un quatorzième état "1" d'attente de numérotation de l'auto-commutateur (4)
- un quinzième état "1P" d'attente de numérotation de l'auto-commutateur (4) alors qu'une protection de grappe est en cours
- un seizième état "1C" d'attente de numérotation de l'auto-commutateur (4) alors qu'une communication générale est en cours
- un dix-septième état "2" d'attente du décroché d'un terminal d'abonnés mobiles sur un appel extragrappe
- un dix-huitième état "3.0" d'attente de l'envoi par l'auto-commutateur (4) de l'invitation à transmettre le numéro du demandeur
- un dix-neuvième état "3.1" d'attente de l'envoi par l'auto-commutateur (4) d'un compte-rendu sur le numéro du terminal demandeur
- un vingtième état "3.2" d'attente de l'envoi par l'auto-commutateur (4) du compte-rendu d'une demande de service
- un vingt et unième état "4" d'attente du décroché de l'abonné extragrappe demandé.

## Claims

1. Device for establishing and routing telephone communications between subscribers of a radio network and/or of a wired telephone network ($8_1$ ... $8_r$, 9) in which the subscribers of the radio network make use of radio transmitter/receiver sets ($2_1$ ... $2_n$) operating in talk/listen and the subscribers of the two networks making use of dialling means ($8_1$ ... $8_r$, 31) for calling their correspondents, of the type comprising an automatic telephone switch (4) coupled to the wired telephone network by means of wired telephone lines, the automatic switch (4) being coupled to the radio telephonie network by means of a plurality of radio transmitter/receivers ($3_1$ ... $3_4$) via a radio connecting unit (5), comprising processing units, each processing unit ($12_i$) being programmed to allow the radio subscribers' network to be organised into clusters of radio subscribers communicating on the same frequency and/or on the same transmission channel, the communications possibly taking place between subscribers in the same cluster or between subscribers belonging to different clusters, characterized in that the radio connecting unit (5) comprises a defined plurality of programmed processing units ($12_i$) each linked to a transmitter/receiver via an interface circuit ($13_i$) and a signal modulator (23) controlled by the interface circuit for transmitting the speech signals between the transmitter/receiver and the interface circuit, the interface circuit ($13_i$) including voice activity detectors (22) to allow the transmission of calls in a talk/listen mode between, on the one hand, the subscribers of the radio telephony network and between the subscribers of the two networks on the other hand, each processing unit ($12_i$) being programmed according to hierarchical authorization levels in order to allow the radio subscribers' network to be organized into groups of radio subscribers communicating on the same frequency and/or on the same transmission channel, the calls possibly taking place between the subscribers of the same group or between subscribers belonging to different groups, or between subscribers belonging to a group and the subscribers of the wired telephone network.

2. Device according to Claim 1, characterized in that each processing unit ($12_i$) is programmed to allow the telephone subscribers to make automatic selective calls to the radio subscribers.

3. Device according to either of Claims 1 or 2, characterized in that each processing unit is programmed to allow the telephone subscribers to be inserted automatically and discretely into the communications of the subscribers of the radio network.

**4.** Device according to any one of Claims 1 to 3, characterized in that each processing unit (12$_i$) is programmed to allow the subscribers of the radio network to make a selective automatic call to any other subscriber of the radio network and/or of the wired telephone network.

**5.** Device according to any one of Claims 1 to 4, characterized in that each processing unit (12$_i$) is programmed to allow the radio subscribers to make collective automatic calls to the other radio subscribers.

**6.** Device according to any one of Claims 1 to 5, characterized in that each processing unit (12$_i$) is programmed to protect the subscribers of the radio network from calls from the subscribers of the wired telephone network.

**7.** Device according to Claim 6, characterized in that each processing unit (12$_i$) is programmed to allow the subscribers belonging to two clusters to be in permanent communication while being protected from the wired telephone network of the other clusters so as to create protected, temporary and occasional networks.

**8.** Device according to Claim 7, characterized in that each processing unit (12$_i$) is programmed to allow priority subscribers to exert a right of preemption over a communication established between subscribers of the radio network.

**9.** Device according to any one of Claims 1 to 8, characterized in that each processing unit (12$_i$) is programmed to cut off communications between subscribers at least one of which is radio, within a period of time determined according to an absence of voice activity detected by the voice activity detection means.

**10.** Device according to any one of Claims 1 to 9, characterized in that each processing unit is programmed according to a table having stable and unstable states, capable of being read in a state register to allow the radio subscribers' network to be organized into clusters of subscribers communicating on the same frequency and/or on the same transmission channel, calls possibly taking place between subscribers of the same cluster or between subscribers belonging to different clusters or between subscribers belonging to the clusters and subscribers of the wired telephone network, each table comprising:
- a first state "R" or rest state indicating that no communication is in progress
- a second state "S" indicating that an extra-cluster communication is in progress
- a third state "CINTRA" for signalling that a general intra-cluster communication in progress is declared to the automatic switch (4)
- a fourth state "CICT" for signalling that a general intra-cluster communication in progress is ignored by the automatic switch (4) and is temporarily on insertion standby
- a fifth state "CICTT" for signalling that a general intra-cluster communication in progress is ignored by the automatic switch (4) and is temporarily on insertion standby
- a sixth state "CINSERT" for signalling that a general intra-cluster communication is taking place with an extra-cluster subscriber
- a seventh state "CEXTRA" for signalling the progress of a general extra-cluster communication on the initiative of a subscriber external to the cluster
- an eighth state "I" for signalling that an individual intra-cluster communication is taking place
- a ninth state "IICT" for signalling that an individual intra-cluster communication in progress is ignored by the automatic switch (4)
- a tenth state "PINTRA" for signalling that a cluster in the process of communicating is protected against any insertion
- an eleventh state "PEXTRA" for signalling that a protected, temporary and occasional network is created
- a twelfth state "PICTT" for signalling that a cluster in the process of communicating is protected and is ignored by the automatic switch (4) temporarily until the arrival of an insertion
- a thirteenth state "PINSERT" for signalling the fact that an extra-cluster subscriber has been inserted into the communication of a cluster

and unstable states including:
- a fourteenth state "1", of standby for dialling from the automatic switch (4)

- a fifteenth state "1P" of standby for dialling from the automatic switch (4) when cluster protection is in progress
- a sixteenth state "1C" of standby for dialling from the automatic switch (4) when a general communication is in progress
- a seventeenth state "2" of standby for the lifting of a mobile subscribers' terminal on an extra-cluster call
- an eighteenth state "3.0" of standby for sending, by the automatic switch (4) of the invitation to transmit the number of the requester
- a nineteenth state "3.1" of standby for sending, by the automatic switch (4), of a report on the number from the requesting terminal
- a twentieth state "3.2" of standby for sending, by the automatic switch (4), of the report on a request for service
- a twenty-first state "4" of standby for the lifting of the extra-cluster subscriber requested.

**Patentansprüche**

1. Vorrichtung zum Aufbau und zur Durchschaltung von Telefonverbindungen zwischen Teilnehmern eines Funktelefonnetzes und/oder eines drahtgebundenen Telefonnetzes ($8_1$ ... $8_r$, 9), bei denen die Teilnehmer des Funktelefonnetzes Funksender-Empfänger ($2_1$ ... $2_n$) mit Wechselsprechbetrieb und die Teilnehmer beider Netze Nummernwahlmittel ($8_1$, ... $8_r$, 31) zum Anrufen ihrer Gesprächspartner besitzen, wobei die Vorrichtung eine Fernsprechwählvermittlungsanlage (4) besitzt, die an das drahtgebundene Telefonnetz über Telefondrahtleitungen gekoppelt ist, während die Wählvermittlungsanlage (4) mit dem Funktelefonnetz mit Hilfe einer Mehrzahl von Funksendern-Empfängern ($3_1$ ... $3_q$) über eine Funkanschlußeinheit (5) mit Verarbeitungseinheiten gekoppelt ist, wobei jede Verarbeitungseinheit ($12_i$) so programmiert ist, daß sie eine Organisation des Funktelefonnetzes in Bündeln von Funktelefonteilnehmern erlaubt, die auf einer gemeinsamen Frequenz und/oder auf einem gemeinsamen Übertragungskanal verkehren, wobei die Verbindungen zwischen Teilnehmern eines Bündels oder zwischen Teilnehmern unterschiedlicher Bündel hergestellt werden können, dadurch gekennzeichnet, daß die Funkanschlußeinheit (5) eine bestimmte Anzahl von programmierten Verarbeitungseinheiten ($12_i$) besitzt, die je an einen Sender-Empfänger über einen Schnittstellenkreis ($13_i$) und einen Signalmodulator (23) angeschlossen sind, der vom Schnittstellenkreis so gesteuert wird, daß er die Sprachsignale zwischen dem Sender-Empfänger und dem Schnittstellenkreis überträgt, wobei der Schnittstellenkreis ($13_i$) Sprachdetektoren (22) enthält, um die Übertragung der Rufsignale in einen Wechselsprechmodus zwischen den Teilnehmern des Funktelefonnetzes untereinander einerseits und zwischen den Teilnehmern der beiden Netze andererseits zu ermöglichen, wobei jede Verarbeitungseinheit ($12_i$) gemäß hierarchischen Genehmigungsebenen programmiert ist, um eine Organisation des Funktelefonnetzes in Gruppen von Funkteilnehmern zu ermöglichen, die auf einer gemeinsamen Frequenz und/oder auf demselben Übertragungskanal miteinander verkehren, wobei Teilnehmer sowohl innerhalb derselben Gruppe als auch zwischen verschiedenen Gruppen als auch zwischen einer Gruppe und dem drahtgebundenen Netz gerufen werden können.

2. Vorrichtung nach Anspruch 1, dadurch gekennzeichnet, daß jede Verarbeitungseinheit ($12_i$) so programmiert ist, daß die Fernsprechteilnehmer automatisch und selektiv Funkteilnehmer rufen können.

3. Vorrichtung nach einem beliebigen der Ansprüche 1 und 2, dadurch gekennzeichnet, daß jede Verarbeitungseinheit so programmiert ist, daß die Fernsprechteilnehmer automatisch und diskret in die Verbindungen der Funkfernsprechteilnehmer eingefügt werden können.

4. Vorrichtung nach einem beliebigen der Ansprüche 1 bis 3, dadurch gekennzeichnet, daß jede Verarbeitungseinheit ($12_i$) so programmiert ist, daß die Teilnehmer des Funkfernsprechnetzes einen automatischen selektiven Ruf nach einem beliebigen anderen Teilnehmer des Funktelefonnetzes und/oder des drahtgebundenen Fernsprechnetzes absetzen können.

5. Vorrichtung nach einem beliebigen der Ansprüche 1 und 4, dadurch gekennzeichnet, daß jede Verarbeitungseinheit ($12_i$) so programmiert ist, daß die Funktelefonteilnehmer automatisch andere Funkfernsprechteilnehmer kollektiv rufen können.

14

EP 0 334 746 B1

**6.** Vorrichtung nach einem beliebigen der Ansprüche 1 bis 5, dadurch gekennzeichnet, daß jede Verarbeitungseinheit ($12_i$) so programmiert ist, daß die Teilnehmer des Funkfernsprechnetzes gegen Anrufe von Teilnehmern des drahtgebundenen Fernsprechnetzes geschützt werden können.

**7.** Vorrichtung nach Anspruch 6, dadurch gekennzeichnet, daß jede Verarbeitungseinheit ($12_i$) so programmiert ist, daß die Teilnehmer, die zwei Bündeln angehören, in dauernder Verbindung stehen können und dabei gegen das drahtgebundene Telefonnetz und andere Bündel geschützt sind, um so vorübergehende geschützte Netze zu erzeugen.

**8.** Vorrichtung nach Anspruch 7, dadurch gekennzeichnet, daß jede Verarbeitungseinheit ($12_i$) so programmiert ist, daß bevorzugte Teilnehmer ein Vorrecht auf eine Verbindung zwischen Teilnehmern des Funkfernsprechnetzes wahrnehmen können.

**9.** Vorrichtung nach einem beliebigen der Ansprüche 1 bis 8, dadurch gekennzeichnet, daß jede Verarbeitungseinheit ($12_i$) so programmiert ist, daß die Gespräche zwischen Teilnehmern, von denen mindestens einer ein Funkfernsprechteilnehmer ist, abgebrochen werden, wenn in einer bestimmten Zeitdauer die Mittel zur Erfassung der Sprachaktivität keine Sprachaktivität feststellen.

**10.** Vorrichtung nach einem beliebigen der Ansprüche 1 bis 9, dadurch gekennzeichnet, daß jede Verarbeitungseinheit gemäß einer Tabelle programmiert ist, die stabile und instabile Zustände enthält und in ein Zustandsregister gelesen werden kann, um eine Organisation des Funkfernsprechnetzes in Bündel von Teilnehmern zu erlauben, die auf einer gleichen Frequenz und/oder in einem gleichen Übertragungskanal verkehren, wobei Gespräche zwischen Teilnehmern eines gleichen Bündels oder zwischen Teilnehmern unterschiedlicher Bündel oder zwischen Teilnehmern stattfinden können, die den Bündeln und dem drahtgebundenen Telefonnetz angehören, und wobei jede Tabelle enthält
- einen ersten Zustand "R" oder Ruhezustand, der angibt, daß kein Gespräch läuft,
- einen zweiten Zustand "S", der angibt, daß ein Gespräch außerhalb des Bündels stattfindet,
- einen dritten Zustand "CINTRA", der angibt, daß eine allgemeine Verbindung innerhalb des Bündels aufgebaut ist und der Wählvermittlungsanlage (4) gemeldet wurde,
- einen vierten Zustand "CICT", der angibt, daß eine allgemeine Verbindung innerhalb des Bündels aufgebaut ist, von der die Wählvermittlungsanlage (4) nichts weiß und die vorübergehend auf die Einfügung wartet,
- einen fünften Zustand "CICTT", der angibt, daß eine allgemeine Verbindung innerhalb des Bündels aufgebaut ist, von der die Wählvermittlungsanlage (4) nichts weiß und die vorübergehend auf die Einfügung wartet,
- einen sechsten Zustand "CINSERT", der angibt, daß eine Verbindung innerhalb des Bündels mit einem Teilnehmer außerhalb des Bündels stattfindet,
- einen siebten Zustand "TEXTRA", der angibt, daß eine allgemeine Verbindung mit außerhalb des Bündels auf Initiative eines Teilnehmers von außerhalb des Bündels stattfindet,
- einen achten Zustand "I", der angibt, daß ein individuelles Gespräch innerhalb des Bündels stattfindet,
- einen neunten Zustand "IICT", der angibt, daß ein individuelles Gespräch innerhalb des Bündels stattfindet und der Wählvermittlungsanlage (4) unbekannt ist,
- einen zehnten Zustand "PINTRA", der angibt, daß ein gerade ein Gespräch übertragendes Bündel gegen jede Einfügung geschützt ist,
- einen elften Zustand "PEXTRA", der angibt, daß ein vorübergehendes geschütztes Netz erzeugt ist,
- einen zwölften Zustand "PICTT", der angibt, daß ein ein Gespräch abwickelndes Bündel geschützt ist, das die Wählvermittlungsanlage (4) vorübergehend nicht kennt, bis eine Einfügung kommt,
- einen dreizehnten Zustand "PINSERT", der angibt, daß ein Teilnehmer von außerhalb des Bündels sich in die Verbindung eines Bündels eingefügt hat,
  und wobei zu den instabilen Zuständen gehören:
- ein vierzehnter Zustand "1", der das Warten der Wählvermittlungsanlage (4) auf die Wählimpulse anzeigt,
- ein fünfzehnter Zustand "1P", der das Warten der Wählvermittlungsanlage (4) auf die Wählimpulse anzeigt, während ein Bündelschutz wirksam ist,

15

- ein sechzehnter Zustand "1C", der das Warten der Wählvermittlungsanlage (4) auf Wählimpulse anzeigt, während eine allgemeine Verbindung aufgebaut ist,
- ein siebzehnter Zustand "2", der das Warten auf das Abheben des Hörers eines mobilen Teilnehmerendgeräts aufgrund eines Anrufs von außerhalb des Bündels anzeigt,
- ein achtzehnter Zustand "3.0", der das Warten auf die Aussendung der Aufforderung durch die Wählvermittlungsanlage (4) anzeigt, die Nummer des rufenden Teilnehmers zu übertragen,
- ein neunzehnter Zustand "3.1", der das Warten auf die Aussendung einer Bestätigung durch die Wählvermittlungsanlage (4) bezüglich der Nummer des rufenden Endgeräts anzeigt,
- ein zwanzigster Zustand "3.2", der das Warten der Aussendung der Bestätigung einer Dienstanfrage durch die Wählvermittlungsanlage (4) anzeigt,
- ein einundzwanzigster Zustand "4", der das Warten auf das Abheben des Hörers des gerufenen Teilnehmers außerhalb des Bündels anzeigt.

## FIG_1

Terminal d'abonné mobile $7_1$

Emetteur récepteur $2_1$

$6_1$

Emetteur récepteur $3_1$

$8_1$ $8r$

$9$

Terminal d'abonné mobile $7j$

Emetteur récepteur $2j$

$6j$

Emetteur récepteur $3_2$

Emetteur récepteur $3j$

Unité de raccordement $5$

Auto-commutateur $4$

Emetteur récepteur $3q-1$

$10$

Terminal d'abonné mobile $7n$

Emetteur récepteur $2n$

Emetteur récepteur $3q$

$6n$

$1$

## FIG_2

$11_1$

Circuits d'interface $13_1$

Unité de traitement $12_1$

Circuits de signalisation $14_1$

$11_i$

Circuits d'interface $13_i$

Unité de traitement $12_i$ $14_i$

Circuits de signalisation

$11_q$

Circuits d'interface $13_q$

Unité de traitement $12_q$ $14_q$

Circuits de signalisation

Vers émetteur_récepteur grappe 1

Vers émetteur récepteur grappe i

Vers émetteur récepteur grappe q

17

Vers
émetteur
récepteur
grappe$_i$

BF LE$_1$ 24

BF LR$_1$

CA

13i

Circuit de compression 19

Circuit de compression 20

BF LE$_2$

BF LR$_2$

Détecteur d'activité vocale 22

Détecteur d'activité vocale 21

RON_TRON

Vers auto-commutateur

Circuits d'interface 18$_2$

12$_i$

Mémoire 16

Microprocesseur 15

Registre d'états

Circuits d'interface 18$_1$

17

14$_i$

Modulateur démodulateur 23

**FIG_3**

Mémoire de programme 27

Microprocesseur 26

Mémoire des données 28

Ecran 29

Sonnerie 32

25

| 1 | 2 | 3 |
| 4 | 5 | 6 |
| 7 | 8 | 9 |

RADIO 0 VALID

IN CIPHER OUT ERASE

INIT ON/OFF

31

I/O 30

33

**FIG_4**

18

## FIG_5

Numérotation
Composition
du message
Modulation
FSK n°312

$7_1$

Emetteur
récepteur

$2_1$

Emetteur
récepteur

$3_1$

Transcodage
FSK→RON/TRON

$11_1$

Analyse de la
numérotation
et des services
Acheminement
de la
communication

4

Décodage FSK
Analyse du
message
Affichage écran
sonnerie

$7_4$

Emetteur
récepteur

$2_4$

Emetteur
récepteur

$3_4$

Transcodage
RON/TRON→FSK

$11_4$

## FIG_6

Terminal
d'abon. mob.

$7_1$

Emetteur
récepteur

$2_1$

Emetteur
récepteur

$3_1$

CA

Commande
d'altern.

Adaptation
BF

$11_1$

Codage
décodage

4

Terminal
d'abon. mob.

$7_4$

Emetteur
récepteur

$2_4$

Emetteur
récepteur

$3_4$

CA

Commande
d'alternat.

Adaptation
BF

$11_4$

# FIG_7

Numérotation
Composition
du message
Modulation
FSK n°312

Grappe n°310

Emetteur
récepteur

Emetteur
recepteur

Transcodage
FSK→RON/TRON

Analyse de la
numérotation
et des services
Grappe 310
occupée
(312 et 315
en communication

Décodage FSK
Analyse du
message
Affichage
écran
Sonnerie
n°315

Emetteur
récepteur

# FIG_8-A

ETAT : R

| REQUETE | APSTR | APRDC | APCNF | APPDG | DECRO |
|---|---|---|---|---|---|
| REPONSE | <- IMPUL (PRISE) | <- IMPUL (PRISE) | <- IMPUL (PRISE) | <- IMPUL (PRISE) | / |
| FINAL | 3.0 | 3.0 | 3.0 | 3.0 | R |
| REQUETE | FINPDG | FINCO | CIPHER | F_ALT | OUT |
| REPONSE | <- LIBER FINPDG -> | / | / | / | <- LIBER |
| FINAL | R | R | R | R | R |
| REQUETE | IMPUL (PRISE) | NUMER | ACCEP | ABNIN | REBOU |
| REPONSE | <- IMPUL (INVTR) | / | / | / | / |
| FINAL | 1 | R | R | R | R |
| REQUETE | LIBER | ABSAV | TEMPO | | |
| REPONSE | / | / | / | | |
| FINAL | R | R | R | | |

# FIG_ 8-B

ETAT :  S

| REQUETE | APSTR | APRDC | APCNF | APPDG | DECRO |
|---|---|---|---|---|---|
| REPONSE | REFUS1 -> | / | <- LIBER <br> <- IMPUL <br> (PRISE) | APRCP -> | / |
| FINAL | S | S | 3.0 | PEXTRA | S |
| REQUETE | FINPDG | FINCO initiateur | FINCO CD1 ou CD2 | FINCO CDU U#1,2 | OUT |
| REPONSE | <- LIBER <br> FINPDG -> | <- LIBER | <- LIBER <br> FINCO -> | / | <- LIBER <br> FINCO -> |
| FINAL | R | R | R | S | R |
| REQUETE | IMPUL | NUMER | ACCEP | ABNIN | REBOU |
| REPONSE | / | / | / | / | / |
| FINAL | S | S | S | S | S |
| REQUETE | LIBER | ABSAV | TEMPO | CIPHER | F_ALT |
| REPONSE | FINCO -> | <- LIBER <br> FINCO -> | / | CRYPTO -> | RAZ DAV |
| FINAL | R | R | S | S | S |

# FIG_8-C

ETAT : CINTRA

| REQUETE | APSTR | APRDC | APCNF | APPDG | DECRO |
|---|---|---|---|---|---|
| REPONSE | REFUS1 -> | / | / | <- LIBER <- IMPUL (PRISE) | / |
| FINAL | CINTRA | CINTRA | CINTRA | 3.0 | CINTRA |
| REQUETE | FINPDG | FINCO initiateur | FINCO CD1 ou CD2 | FINCO CDU U#1,2 | OUT |
| REPONSE | <- LIBER FINPDG -> | <- LIBER | <- LIBER FINCO -> | / | <- LIBER FINCO -> |
| FINAL | R | R | R | CINTRA | R |
| REQUETE | IMPUL | NUMER | ACCEP | ABSIN | REBOU |
| REPONSE | / | / | / | / | / |
| FINAL | CINTRA | CINTRA | CINTRA | CINTRA | CINTRA |
| REQUETE | LIBER | ABSAV | TEMPO | CIPHER | F_ALT |
| REPONSE | / | / | / | mémorisation du mode | / |
| FINAL | CICTT | CINTRA | CINTRA | CINTRA | CINTRA |

# FIG_8-D

**ETAT** : CICT

| REQUETE | APSTR | APRDC | APCNF | APPDG | DECRO |
|---|---|---|---|---|---|
| REPONSE | REFUS1 -> | | <- LIBER <br> <- PRISE | <- LIBER <br> <- PRISE | / |
| FINAL | CICT | CICT | 3.0 | 3.0 | CICT |
| REQUETE | FINPDG | FINCO initiateur | FINCO CD1 ou CD2 | FINCO CDU U#1,2 | OUT |
| REPONSE | <- LIBER <br> FINPDG -> | <- LIBER | <- LIBER | / | <- LIBER <br> FINCO -> |
| FINAL | R | R | R | CICT | R |
| REQUETE | IMPUL (PRISE) | NUMER | ACCEP | ABNIN | REBOU |
| REPONSE | <- IMPUL (INVTR) | / | / | / | / |
| FINAL | 1C | CICT | CICT | CICT | CICT |
| REQUETE | LIBER | ABSAV | TEMPO | CIPHER | F_ALT |
| REPONSE | / | / | / | mémorisa- tion du mode | / |
| FINAL | CICTT | CICT | CICT | CICT | CICT |

# FIG_8-E

ETAT : CICTT

| REQUETE | APSTR | APRDC | APCNF | APPDG | DECRO |
|---|---|---|---|---|---|
| REPONSE | REFUS1 -> | / | / | <- LIBER<br><- PRISE | / |
| FINAL | CICTT | CICTT | CICTT | 3.0 | CICTT |
| REQUETE | FINPDG | FINCO<br>initiateur | FINCO<br>CD1 ou CD2 | FINCO<br>CDU U#1,2 | OUT |
| REPONSE | <- LIBER<br>FINPDG -> | <- LIBER | <- LIBER | / | <- LIBER<br>FINCO -> |
| FINAL | R | R | R | CICTT | R |
| REQUETE | IMPUL<br>(PRISE) | NUMER | ACCEP | ABNIN | REBOU |
| REPONSE | <- IMPUL<br>(INVTR) | / | / | / | / |
| FINAL | 1C | CICTT | CICTT | CICTT | CICTT |
| REQUETE | LIBER | ABSAV | TEMPO<br>(30 sec) | CIPHER | F_ALT |
| REPONSE | <- IMPUL<br>(PRISE) | / | <- IMPUL<br>(PRISE) | mémorisa-<br>tion du<br>mode | / |
| FINAL | 3.0 | CICTT | 3.0 | CICTT | CICTT |

# FIG_8-F

**ETAT** : CINSERT

| REQUETE | APSTR | APRDC | APCNF | APPDG | DECRO |
|---|---|---|---|---|---|
| REPONSE | REFUS1 -> | / | / | <- LIBER <br> <- PRISE | / |
| FINAL | CINSERT | CINSERT | CINSERT | 3.0 | CINSERT |
| REQUETE | FINPDG | FINCO initiateur | FINCO CD1 ou CD2 | FINCO CDU U#1,2 | OUT |
| REPONSE | <- LIBER FINPDG -> | <- LIBER | <- LIBER | / | <- LIBER FINCO -> |
| FINAL | R | R | R | CINSERT | R |
| REQUETE | IMPUL (PRISE) | NUMER | ACCEP | ABNIN | REBOU |
| REPONSE | / | / | / | / | / |
| FINAL | CINSERT | CINSERT | CINSERT | CINSERT | CINSERT |
| REQUETE | LIBER | ABSAV | TEMPO | CIPHER | F_ALT |
| REPONSE | <- IMPUL (PRISE) | / | / | mémorisa- tion du mode | / |
| FINAL | 3.0 | CINSERT | CINSERT | CINSERT | CINSERT |

EP 0 334 746 B1

# FIG_8-G

**ETAT : CEXTRA**

| REQUETE | APSTR | APRDC | APCNF | APPDG | DECRO |
|---|---|---|---|---|---|
| REPONSE | REFUS1 -> | / | / | <- LIBER <br> <- PRISE | / |
| FINAL | CEXTRA | CEXTRA | CINSERT | 3.0 | CEXTRA |
| REQUETE | FINPDG | F_ALT | FINCO <br> CD1 ou CD2 | FINCO <br> CDU U#1,2 | OUT |
| REPONSE | <- LIBER <br> FINPDG -> | RAZ DAV | <- LIBER | / | <- LIBER <br> FINCO -> |
| FINAL | R | CEXTRA | R | CEXTRA | R |
| REQUETE | IMPUL <br> (PRISE) | NUMER | ACCEP | ABNIN | REBOU |
| REPONSE | / | / | / | / | / |
| FINAL | CEXTRA | CEXTRA | CEXTRA | CEXTRA | CEXTRA |
| REQUETE | LIBER | ABSAV | TEMPO | CIPHER | |
| REPONSE | FINCO -> | / | / | CRYPTO -> | |
| FINAL | R | CEXTRA | CEXTRA | CEXTRA | |

27

# FIG_8-H

ETAT : I

| REQUETE | APSTR | APRDC | APCNF | APPDG | DECRO |
|---|---|---|---|---|---|
| REPONSE | REFUS1 -> | / | <- LIBER <br> <- IMPUL <br> (PRISE) | <- LIBER <br> <- IMPUL <br> (PRISE) | / |
| FINAL | I | I | 3.0 | 3.0 | I |
| REQUETE | FINPDG | FINCO <br> ab. en com | FINCO <br> CD1 ou CD2 | FINCO <br> autres | OUT |
| REPONSE | <- LIBER <br> FINPDG -> | <- LIBER | <- LIBER <br> FINCO -> | / | <- LIBER <br> FINCO -> |
| FINAL | R | R | R | I | R |
| REQUETE | IMPUL | NUMER | ACCEP | ABNIN | REBOU |
| REPONSE | / | / | / | / | / |
| FINAL | I | I | I | I | I |
| REQUETE | LIBER | ABSAV | TEMPO <br> (3 mn) | CIPHER | F_ALT |
| REPONSE | FINCO -> | / | <- LIBER | / | / |
| FINAL | R | I | IICT | I | I |

# FIG_8-I

**ETAT : IICT**

| REQUETE | APSTR | APRDC | APCNF | APPDG | DECRO |
|---|---|---|---|---|---|
| REPONSE | <- IMPUL (PRISE) | <- IMPUL (PRISE) | <- IMPUL (PRISE) | <- LIBER FINCO -> <- IMPUL (PRISE) | / |
| FINAL | 3.0 | 3.0 | 3.0 | 3.0 | IICT |
| REQUETE | FINPDG | FINCO ab. en com | FINCO CD1 ou CD2 | FINCO autres | OUT |
| REPONSE | <- LIBER FINPDG -> | <- LIBER | <- LIBER FINCO -> | / | <- LIBER FINCO -> |
| FINAL | R | R | R | I | R |
| REQUETE | IMPUL (PRISE) | NUMER | ACCEP | ABNIN | REBOU |
| REPONSE | FINCO -> <- IMPUL (INVTR) | / | / | / | / |
| FINAL | 1 | IICT | IICT | IICT | IICT |
| REQUETE | LIBER | ABSAV | TEMPO | CIPHER | F_ALT |
| REPONSE | / | / | / | / | / |
| FINAL | IICT | IICT | IICT | IICT | IICT |

# FIG_8-J

ETAT : PINTRA

| REQUETE | APSTR | APRDC | APCNF | APPDG | DECRO |
|---|---|---|---|---|---|
| REPONSE | REFUS1 -> | / | / | APPDG -> | / |
| FINAL | PINTRA | PINTRA | PINTRA | PINTRA | PINTRA |
| REQUETE | FINPDG | FINCO | CIPHER | F_ALT | OUT |
| REPONSE | <- LIBER FINPDG -> | / | mémorisation du mode | / | <- LIBER FINPDG -> |
| FINAL | R | PINTRA | PINTRA | PINTRA | R |
| REQUETE | IMPUL | NUMER | ACCEP | ABNIN | REBOU |
| REPONSE | / | / | / | / | / |
| FINAL | PINTRA | PINTRA | PINTRA | PINTRA | PINTRA |
| REQUETE | LIBER | ABSAV | TEMPO | | |
| REPONSE | / | / | / | | |
| FINAL | PICTT | PINTRA | PINTRA | | |

# FIG_8-K

**ETAT : PEXTRA**

| REQUETE | APSTR | APRDC | APCNF | APPDG | DECRO |
|---|---|---|---|---|---|
| REPONSE | REFUS1 -> | / | / | APRCP -> | / |
| FINAL | PEXTRA | PEXTRA | PEXTRA | PEXTRA | PEXTRA |
| REQUETE | FINPDG | FINCO | CIPHER | F_ALT | OUT |
| REPONSE | <- LIBER FINPDG -> | / | CRYPTO -> | RAZ_DAV | <- LIBER FINPDG -> |
| FINAL | R | PEXTRA | PEXTRA | PEXTRA | R |
| REQUETE | IMPUL | NUMER | ACCEP | ABNIN | REBOU |
| REPONSE | / | / | / | / | / |
| FINAL | PEXTRA | PEXTRA | PEXTRA | PEXTRA | PEXTRA |
| REQUETE | LIBER | ABSAV | TEMPO | | |
| REPONSE | APPDG -> <- IMPUL (PRISE) | / | / | | |
| FINAL | 3.0 | PEXTRA | PEXTRA | | |

# FIG_8-L

ETAT : PICTT

| REQUETE | APSTR | APRDC | APCNF | APPDG | DECRO |
|---|---|---|---|---|---|
| REPONSE | REFUS1 -> | / | / | APPDG -> | / |
| FINAL | PICTT | PICTT | PICTT | PICTT | PICTT |
| REQUETE | FINPDG | FINCO | CIPHER | F_ALT | OUT |
| REPONSE | <- LIBER FINPDG -> | / | mémorisa- tion du mode | / | <- LIBER FINPDG -> |
| FINAL | R | PICTT | PICTT | PICTT | R |
| REQUETE | IMPUL (PRISE) | NUMER | ACCEP | ABNIN | REBOU |
| REPONSE | <- IMPUL (INVTR) | / | / | / | / |
| FINAL | 1P | PICTT | PICTT | PICTT | PICTT |
| REQUETE | LIBER | ABSAV | TEMPO | | |
| REPONSE | <- IMPUL (PRISE) | / | / | | |
| FINAL | 3.0 | PICTT | PICTT | | |

# FIG_8-M

ETAT : PINSERT

| REQUETE | APSTR | APRDC | APCNF | APPDG | DECRO |
|---|---|---|---|---|---|
| REPONSE | REFUS1 -> | / | / | APPDG -> | / |
| FINAL | PINSERT | PINSERT | PINSERT | PINSERT | PINSERT |
| REQUETE | FINPDG | FINCO | CIPHER | F_ALT | OUT |
| REPONSE | <- LIBER FINPDG -> | / | CRYPTO -> | RAZ_DAV | <- LIBER FINPDG -> |
| FINAL | R | PINSERT | PINSERT | PINSERT | R |
| REQUETE | IMPUL | NUMER | ACCEP | ABNIN | REBOU |
| REPONSE | / | / | / | / | / |
| FINAL | PINSERT | PINSERT | PINSERT | PINSERT | PINSERT |
| REQUETE | LIBER | ABSAV | TEMPO | | |
| REPONSE | <- IMPUL (PRISE) | / | / | | |
| FINAL | 3.0 | PINSERT | PINSERT | | |

# FIG_8-N

ETAT : 1

| REQUETE | APSTR | APRDC | APCNF | APPDG | DECRO |
|---------|-------|-------|-------|-------|-------|
| REPONSE | REFUS1 -> | / | <- LIBER<br><- IMPUL<br>(PRISE) | <- LIBER<br><- IMPUL<br>(PRISE) | / |
| FINAL | 1 | 1 | 3.0 | 3.0 | 1 |
| REQUETE | FINPDG | FINCO<br>CD1 ou CD2 | FINCO<br>autres | CIPHER | OUT |
| REPONSE | <- LIBER<br>FINPDG -> | <- LIBER | / | / | <- LIBER |
| FINAL | R | R | 1 | 1 | R |
| REQUETE | IMPUL | NUMER | ACCEP | ABNIN | REBOU |
| REPONSE | / | <- ACCEP<br>APSTR -> | / | / | / |
| FINAL | 1 | 2 | 1 | 1 | 1 |
| REQUETE | LIBER | ABSAV | TEMPO<br>500 ms | F_ALT | |
| REPONSE | / | / | <- LIBER | / | |
| FINAL | R | 1 | R | 1 | |

# FIG_8-0

ETAT : 1C

| REQUETE | APSTR | APRDC | APCNF | APPDG | DECRO |
|---|---|---|---|---|---|
| REPONSE | REFUS1 -> | / | / | <- LIBER <- IMPUL (PRISE) | / |
| FINAL | 1C | 1C | 1C | 3.0 | 1C |
| REQUETE | FINPDG | FINCO CD1 ou CD2 | FINCO initiateur | FINCO autres | OUT |
| REPONSE | <- LIBER FINPDG -> | <- LIBER FINCO -> | <- LIBER | / | <- LIBER FINCO -> |
| FINAL | R | R | R | 1C | R |
| REQUETE | IMPUL | NUMER avec U=0 | NUMER avec U#0 | ACCEP | ABNIN |
| REPONSE | / | <- ACCEP <- REPON | <- LIBER <- IMPUL (PRISE) | / | / |
| FINAL | 1C | CINSERT | 3.0 | 1C | 1C |
| REQUETE | REBOU | LIBER | TEMPO 500 ms | F_ALT | ABSAV |
| REPONSE | / | <- IMPUL (PRISE) | <- LIBER <- IMPUL (PRISE) | / | / |
| FINAL | R | 3.0 | 3.0 | 1C | 1C |
| REQUETE | CIPHER | | | | |
| REPONSE | mémorisation du mode | | | | |
| FINAL | 1C | | | | |

# FIG_8-P

ETAT : 1P

| REQUETE | APSTR | APRDC | APCNF | APPDG | DECRO |
|---------|-------|-------|-------|-------|-------|
| REPONSE | REFUS1 -> | / | / | APPDG -> | / |
| FINAL | 1P | 1P | 1P | 1P | 1P |
| REQUETE | FINPDG | FINCO | CIPHER | F_ALT | OUT |
| REPONSE | <- LIBER FINPDG -> | / | mémorisation du mode | / | <- LIBER FINPDG -> |
| FINAL | R | 1P | 1P | 1P | R |
| REQUETE | IMPUL | NUMER avec U=0 | NUMER avec U#0 | ACCEP | ABNIN |
| REPONSE | / | <- ACCEP <- REPON | <- LIBER <- IMPUL (PRISE) | / | / |
| FINAL | 1P | PINSERT | 3.0 | 1P | 1P |
| REQUETE | REBOU | LIBER | TEMPO 30 sec | ABSAV | |
| REPONSE | / | <- IMPUL (PRISE) | <- LIBER <- IMPUL (PRISE) | / | |
| FINAL | R | 3.0 | 3.0 | 1P | |

# FIG_8-Q

ETAT : 2

| REQUETE | APSTR | APRDC | APCNF | APPDG | DECRO |
|---|---|---|---|---|---|
| REPONSE | REFUS1 -> | | <- LIBER<br><- IMPUL<br>(PRISE) | <- LIBER<br>FINCO -><br><- IMPUL<br>(PRISE) | <- REPON |
| FINAL | 2 | 2 | 3.0 | 3.0 | S |
| REQUETE | FINPDG | FINCO<br>appelé | FINCO<br>CD1 ou CD2 | FINCO<br>autres | OUT |
| REPONSE | <- LIBER<br>FINPDG -> | <- LIBER | <- LIBER<br>FINCO -> | / | <- LIBER<br>FINCO -> |
| FINAL | R | R | R | 2 | R |
| REQUETE | IMPUL | NUMER | ACCEP | ABNIN | REBOU |
| REPONSE | / | / | / | / | / |
| FINAL | 2 | 2 | 2 | 2 | 2 |
| REQUETE | LIBER | ABSAV | TEMPO<br>1 mn | CIPHER | F_ALT |
| REPONSE | FINCO -> | / | FINCO -> | / | / |
| FINAL | R | 2 | R | 2 | 2 |

EP 0 334 746 B1

ETAT : 3.0

| REQUETE | APSTR | APRDC | APCNF | APCNF | APPDG |
|---|---|---|---|---|---|
| ETAT précéd. | / | / | Pxxxx | autres | / |
| APPEL précéd. | / | / | ou APPDG | autres | / |
| REPONSE | REFUS1 -> | / | / | prise en compte | Prise en compte |
| FINAL | 3.0 | 3.0 | 3.0 | 3.0 | 3.0 |
| REQUETE | FINPDG | FINCO | FINCO CD1 ou CD2 | FINCO initiateur | FINCO autres |
| ETAT précéd. | / | Pxxxxx | Tout état sauf Pxxx | Tout état sauf Pxxxx | / |
| APPEL précéd. | / | ou APPDG | tout appel sauf APPDG | Tout appel sauf APPDG | / |
| REPONSE | <- LIBER FINPDG -> | / | <- LIBER FINCO -> | <- LIBER | / |
| FINAL | R | 3.0 | R | R | 3.0 |
| REQUETE | CIPHER | CIPHER | F_ALT | OUT | OUT |
| ETAT précéd. | Pxxxx ou Cxxxx | autres | / | Pxxxx | autres |
| APPEL précéd. | / | / | / | ou APPDG | autres |
| REPONSE | Mémorisation du mode | / | / | <- LIBER FINPDG -> | <- LIBER FINCO -> |
| FINAL | 3.0 | 3.0 | 3.0 | R | R |
| REQUETE | IMPUL (INVTR) | NUMER | ACCEP | ABNIN | REBOU |
| ETAT précéd. | / | / | / | / | / |
| APPEL précéd. | / | / | / | / | / |
| REPONSE | <- NUMDR | / | / | / | / |
| FINAL | 3.1 | 3.0 | 3.0 | 3.0 | 3.0 |

# FIG_8-R

38

# FIG_8-S

**ETAT : 3.0 (suite)**

| REQUÊTE | LIBER | LIBER | LIBER | LIBER | ABSAV |
|---|---|---|---|---|---|
| ETAT précéd. | Cxxxxx | Pxxxxx | I | / | / |
| APPEL précéd. | ou APCNF | ou APPDG | ou APRDC | APSTR | / |
| REPONSE | / | FINPDG -> | / | REFUS2-> | / |
| FINAL | CICT | R | IICT | R | 3.0 |
| REQUÊTE | TEMPO 30 sec | TEMPO 30 sec | TEMPO 30 sec | TEMPO 30 sec | DECRO |
| ETAT précéd. | CICTT | PICTT | I | / | / |
| APPEL précéd. | ou APCNF | ou APPDG | ou APRDC | APSTR | / |
| REPONSE | / | FINPDG -> | / | REFUS2-> | / |
| FINAL | CICT | R | IICT | R | 3.0 |

# FIG_8-T

**ETAT : 3.1**

| REQUETE | APSTR | APRDC | APCNF | APCNF | APPDG |
|---|---|---|---|---|---|
| ETAT précéd. | / | / | Pxxxxx ou Cxxxxx | autres | Pxxxxx |
| APPEL précéd. | / | / | ou APPDG ou APCNF | autres | ou APPDG |
| REPONSE | REFUS1 -> | / | / | <- LIBER <- IMPUL (PRISE) | / |
| FINAL | 3.1 | 3.1 | 3.1 | 3.0 | 3.1 |

| REQUETE | APPDG | DECRO | FINCO CD1 ou CD2 | FINCO initiateur | FINCO autres |
|---|---|---|---|---|---|
| ETAT précéd. | autres | / | Tout état sauf Pxxxx | Tout état sauf Pxxxx | / |
| APPEL précéd. | autres | / | tout appel sauf APPDG | Tout appel sauf APPDG | / |
| REPONSE | <- LIBER <- IMPUL (PRISE) | / | <- LIBER FINCO -> | <- LIBER | / |
| FINAL | 3.0 | 3.1 | R | R | 3.1 |

| REQUETE | FINCO | CIPHER | CIPHER | OUT | OUT |
|---|---|---|---|---|---|
| ETAT précéd. | Pxxxx | Pxxxxx ou Cxxxxx | autres | PICTT | autres |
| APPEL précéd. | ou APPDG | / | / | ou APPDG | autres |
| REPONSE | / | Mémorisa_tion du mode | / | <- LIBER FINPDG -> | <- LIBER FINCO -> |
| FINAL | 3.1 | 3.1 | 3.1 | R | R |

| REQUETE | FINPDG | IMPUL (REFUS) | IMPUL (REFUS) | IMPUL (REFUS) | IMPUL (REFUS) |
|---|---|---|---|---|---|
| ETAT précéd. | / | Pxxxx | Cxxxx | IICT | / |
| APPEL précéd. | / | ou APPDG | ou APCNF | ou APRDC | APSTR |
| REPONSE | <- LIBER FINPDG -> | <- LIBER FINPDG -> | <- LIBER | <- LIBER | REFUS2 -> |
| FINAL | R | R | CICT | IICT | R |

# FIG_8-U

**ETAT : 3.1 (suite)**

| REQUETE | LIBER | LIBER | LIBER | LIBER | ABSAV |
|---|---|---|---|---|---|
| ETAT précéd. | Cxxxx | Pxxxxx | I | / | / |
| APPEL précéd. | ou APCNF | ou APPDG | ou APRDC | APSTR | / |
| REPONSE | / | FINPDG -> | / | REFUS2-> | / |
| FINAL | CICT | R | IICT | R | 3.0 |
| REQUETE | TEMPO 30 sec | TEMPO 30 sec | TEMPO 30 sec | TEMPO 30 sec | REBOU |
| ETAT précéd. | Cxxxx | Pxxxxx | I | / | / |
| APPEL précéd. | ou APCNF | ou APPDG | ou APRDC | APSTR | / |
| REPONSE | / | FINPDG -> | / | REFUS2-> | / |
| FINAL | CICT | R | IICT | R | 3.1 |
| REQUETE | ACCEP | ABNIN | F_ALT | NUMER | |
| ETAT précéd. | / | / | / | / | |
| APPEL précéd. | / | / | / | / | |
| REPONSE | <- NUMDE | <- NUMDE | / | / | |
| FINAL | 3.2 | 3.2 | 3.1 | 3.1 | |

# FIG_8-V

**ETAT : 3.2**

| REQUETE | APSTR | APRDC | APCNF | APCNF | APPDG |
|---|---|---|---|---|---|
| ETAT précéd. | / | / | Pxxxxx ou Cxxxxx | autres | Pxxxx |
| APPEL précéd. | / | / | ou APPDG ou APCNF | autres | ou APPDG |
| REPONSE | REFUS1 -> | / | / | <- LIBER <- IMPUL (PRISE) | / |
| FINAL | 3.2 | 3.2 | 3.2 | 3.0 | 3.2 |
| REQUETE | APPDG | DECRO | FINCO CD1 ou CD2 | FINCO initiateur | FINCO autres |
| ETAT précéd. | autres | / | Tout état sauf Pxxxx | Tout état sauf Pxxxx | / |
| APPEL précéd. | autres | / | tout appel sauf APPDG | Tout appel sauf APPDG | / |
| REPONSE | <- LIBER <- IMPUL (PRISE) | / | <- LIBER FINCO -> | <- LIBER | / |
| FINAL | 3.0 | 3.2 | R | R | 3.2 |
| REQUETE | FINCO | CIPHER | CIPHER | OUT | OUT |
| ETAT précéd. | Pxxxxx | Pxxxxx ou Cxxxx | autres | Pxxxx | autres |
| APPEL précéd. | ou APPDG | / | / | ou APPDG | autres |
| REPONSE | / | Mémorisa_ tion du mode | / | <- LIBER FINPDG -> | <- LIBER FINCO -> |
| FINAL | 3.2 | 3.2 | 3.2 | R | R |
| REQUETE | FINPDG | IMPUL (REFUS) | IMPUL (REFUS) | IMPUL (REFUS) | IMPUL (REFUS) |
| ETAT précéd. | / | Pxxxxx | Cxxxxx | / | / |
| APPEL précéd. | / | ou APPDG | ou APCNF | APRDC | APSTR et ACCEP |
| REPONSE | <- LIBER FINPDG -> | <- LIBER FINPDG -> | <- LIBER | <- LIBER | REFUS2 -> <- LIBER |
| FINAL | R | R | CICT | IICT | R |

# FIG_8-W

ETAT : 3.2 (suite)

| REQUETE | IMPUL (REFUS) | LIBER | LIBER | LIBER | LIBER |
|---|---|---|---|---|---|
| ETAT précéd. | / | Pxxxxx | I | / | Cxxxxx |
| APPEL précéd. | ABNIN et APSTR | ou APPDG | ou APRDC | APSTR | ou APCNF |
| REPONSE | <- LIBER REFUS3 -> | FINPDG -> | / | REFUS2-> | / |
| FINAL | CICT | R | IICT | R | CICT |

| REQUETE | TEMPO 30 sec | TEMPO 30 sec | TEMPO 30 sec | TEMPO 30 sec | NUMER |
|---|---|---|---|---|---|
| ETAT précéd. | Cxxxxx | Pxxxxx | I | / | Pxxxxx |
| APPEL précéd. | ou APCNF | ou APPDG | ou APRDC | APSTR | ou APPDG |
| REPONSE | / | FINPDG -> | / | REFUS2-> | <- LIBER FINPDG -> |
| FINAL | CICT | R | IICT | R | R |

| REQUETE | NUMER | NUMER | NUMER | ACCEP | ACCEP |
|---|---|---|---|---|---|
| ETAT précéd. | / | Cxxxxx | / | Pxxxx | Cxxxxx |
| APPEL précéd. | APSTR | ou APCNF | APRDC | ou APPDG | ou APCNF |
| REPONSE | <- LIBER REFUS2 -> | <- LIBER | <- LIBER | <- LIBER FINPDG -> | <- LIBER |
| FINAL | R | CICT | IICT | R | CICT |

| REQUETE | ACCEP | ACCEP | REBOU | REBOU | REBOU |
|---|---|---|---|---|---|
| ETAT précéd. | / | / | / | / | Cxxxxx |
| APPEL précéd. | APSTR | APRDC | APSTR | ou APRDC | ou APCNF |
| REPONSE | AC_SER -> | <- LIBER | APINT -> | / | / |
| FINAL | 4 | IICT | I | I | CINTRA |

# FIG_8-X

**ETAT : 3.2 (suite)**

| REQUETE | REBOU | ABNIN | ABNIN | ABNIN | ABNIN |
|---|---|---|---|---|---|
| ETAT précéd. | PICTT ou PINSERT | / | Pxxxxx | Cxxxxx | / |
| APPEL précéd. | ou APPDG | APSTR | ou APPDG | ou APCNF | APRDC |
| REPONSE | APPDG -> | REFUS4 -> <- LIBER | <- LIBER FINPDG -> | <- LIBER | <- LIBER |
| FINAL | PINTRA | R | R | CICT | IICT |
| REQUETE | ABSAV | F_ALT | | | |
| ETAT précéd. | / | / | | | |
| APPEL précéd. | / | / | | | |
| REPONSE | / | / | | | |
| FINAL | 3.2 | 3.2 | | | |

# FIG_8-Y

ETAT : 4

| REQUETE | APSTR | APRDC | APCNF | APPDG | DECRO |
|---------|-------|-------|-------|-------|-------|
| REPONSE | REFUS1 -> | / | <- LIBER <br> <- IMPUL <br> (PRISE) | <- LIBER <br> FINCO -> <br> <- IMPUL <br> (PRISE) | / |
| FINAL | 4 | 4 | 3.0 | 3.0 | 4 |
| REQUETE | FINPDG | FINCO <br> initiateur | FINCO <br> CD1 ou CD2 | FINCO <br> autres | OUT |
| REPONSE | <- LIBER <br> FINPDG -> | <- LIBER | <- LIBER <br> FINCO -> | / | <- LIBER <br> FINCO -> |
| FINAL | R | R | R | 4 | R |
| REQUETE | IMPUL <br> (REPON) | NUMER | ACCEP | ABNIN | REBOU |
| REPONSE | DECRO -> | / | / | / | / |
| FINAL | S | 4 | 4 | 4 | 4 |
| REQUETE | LIBER | ABSAV | TEMPO <br> 2 mn | CIPHER | F_ALT |
| REPONSE | FINSERV -> | / | <- LIBER <br> FINCO -> | / | / |
| FINAL | R | 4 | R | 4 | 4 |

45